# EUROPEAN PATENT APPLICATION

(11) **EP 4 545 688 A1**
(43) Date of publication of application: **30.04.2025**
(21) Application number: 23831299.5
(22) Date of filing: 23.06.2023
(51) Int. Cl.: C25B 13/08, B01J 39/04, B01J 39/19, B01J 47/12, C25B 1/04, C25B 9/00, C25B 9/23, C25B 11/052, C25B 13/04, H01B 1/06, H01M 8/10, H01M 8/1018, H01M 8/1039, H01M 8/1051, H01M 8/1053, H01M 8/1067

(54) **ELECTROLYTE MEMBRANE, ELECTROLYTE MEMBRANE WITH CATALYST LAYER, TRANSFER SHEET USED FOR PRODUCING SAME, MEMBRANE-ELECTRODE ASSEMBLY, WATER ELECTROLYSIS DEVICE, AND METHOD FOR MANUFACTURING ELECTROLYTE MEMBRANE WITH CATALYST LAYER**

(30) Priority: 27.06.2022 JP 2022102459; 16.11.2022 JP 2022183174
(71) Applicant: Toray Industries, Inc., Tokyo 103-8666 (JP)
(72) Inventor: IKAMI Takaya, Otsu-shi, Shiga 520-8558 (JP); MINAMIBAYASHI Kenta, Otsu-shi, Shiga 520-8558 (JP); KUNITA Tomoyuki, Otsu-shi, Shiga 520-8558 (JP); MATSUI Kazuma, Otsu-shi, Shiga 520-8558 (JP); IZUHARA Daisuke, Otsu-shi, Shiga 520-8558 (JP)
(74) Representative: Hoefer & Partner Patentanwälte mbB
(86) International application number: PCT/JP2023/023321
(87) International publication number: WO 2024/004857

(57) **Abstract**

An object of the present invention is to provide an electrolyte membrane having a good joining property with a catalyst layer. The present invention mainly relates to an electrolyte membrane including a layer (A) containing a polymer electrolyte, and a layer (B) existing on at least one face of the layer (A), wherein a particle concentration (Y1) in an interface region of the layer (B), on the layer (A) side, is higher than a particle concentration (Y2) in another interface region of the layer (B), on the opposite side to the layer (A). The particle concentration (Y1) and the particle concentration (Y2) are ratios of the mass of particles existing in the interface region to the total mass of solids existing in the interface region.

## Description

### Technical Field

The present invention relates to an electrolyte membrane, a catalyst-coated electrolyte membrane and a transfer sheet used for production thereof, a membrane electrode assembly, a water electrolysis device, and a method of producing a catalyst-coated electrolyte membrane.

### Background Art

In recent years, hydrogen energy has been attracting attention as means of energy storage and transportation in the next generation. Hydrogen used as a fuel for a fuel cell can be converted into electric power with a theoretically higher energy efficiency than power generation performed using a heat engine, generates relatively less harmful emission, and thus, can become a highly efficient and clean source of energy.

An example of a mode of hydrogen production is electrolysis of water. Electrolyzing water using surplus electric power from a renewable energy can convert electric power into hydrogen energy without emitting carbon dioxide. Furthermore, depending on the mode of storage, hydrogen can be transported in a tank lorry or a tanker, can be supplied where and when necessary, and thus, electrolysis of water has a high possibility as a tool of storage of electric power.

Examples of the mode of hydrogen production based on electrolysis of water include alkaline water electrolysis and a polymer electrolyte membrane (PEM) type of water electrolysis. The PEM type of water electrolysis can be operated at a high current density, and has the advantage of being capable of flexibly dealing with fluctuations in output of renewable energy.

PEM type of hydrolysis device is usually constituted by cell units, each cell including a membrane electrode assembly (MEA) sandwiched between separators. The MEA is constituted by a catalyst-coated electrolyte membrane (Catalyst Coated Membrane: CCM) having a catalyst layer formed on each of both faces of the polymer electrolyte membrane, one of the catalyst layers being an anode catalyst layer and the other being a cathode catalyst layer. Water is supplied to the anode catalyst layer of the PEM type of water electrolysis cell to which an electric current has been applied, and protons are produced by an electrochemical reaction. Subsequently, protons diffuse through the polymer electrolyte membrane from the anode electrode layer side to the cathode electrode layer side, and hydrogen is produced from the protons by the electrochemical reaction in the cathode layer.

In the PEM type of water electrolysis device, a joining property at the interface between the catalyst layer and the polymer electrolyte membrane may deteriorate during water electrolysis operation. Therefore, in order to improve the joining property between the polymer electrolyte membrane and the catalyst layer, it has been proposed to place an adhesive layer between the polymer electrolyte membrane and the catalyst layer (see, for example, Patent Literatures 1 and 2).

### Citation List

### Patent Literature

Patent Literature 1: JP2008-512844A
Patent Literature 2: JP2011-187436A

### Summary of Invention

### Technical Problem

However, the conventional techniques as described in the patent literatures described above failed to sufficiently enhance the joining property between the polymer electrolyte membrane and the catalyst layer. When the adhesion between the electrolyte membrane and the catalyst layer is insufficient, for example, the electrolyte membrane may peel off the catalyst layer or the adhesion may decrease during operation of the water electrolysis device, resulting in a decrease in protonic conductivity, which may lead to a decrease in water electrolysis capability.

In view of such a background, an object of the present invention is to provide an electrolyte membrane having a good joining property with a catalyst layer. Solution to Problem

To achieve the above-described objects, an electrolyte membrane according to the present invention has the following constitution. That is, the electrolyte membrane according to the present invention is an electrolyte membrane including a layer (A) containing a polymer electrolyte; and a layer (B) existing on at least one of the faces of the layer (A), wherein a particle concentration (Y1), defined below, in an interface region of the layer (B), on the layer (A) side, is higher than a particle concentration (Y2), defined below, in another interface region of the layer (B), on the opposite side to the layer (A). The particle concentration (Y1) and the particle concentration (Y2) are ratios of the mass of particles existing in the interface region to the total mass of solids existing in the interface region. That is, the particle concentration (Y1) is a ratio of the mass of particles existing in the interface region of the layer (B), on the layer (A) side, to the total mass of solids existing in the interface region, and the particle concentration (Y2) is a ratio of the mass of particles existing in the interface region of the layer (B), on the opposite side to the layer (A), to the total mass of solids existing in the interface region.

### Advantageous Effects of Invention

The present invention can provide an electrolyte membrane having an excellent joining property with a catalyst layer.

### Brief Description of Drawings

FIG. 1 is a schematic cross-sectional view of an electrolyte membrane according to an embodiment 1 of the present invention.
FIG. 2 is a schematic cross-sectional view of a catalyst-coated electrolyte membrane using the electrolyte membrane according to the embodiment 1 of the present invention.
FIG. 3 is a schematic cross-sectional view of an electrolyte membrane according to an embodiment 2 of the present invention.
FIG. 4 is a schematic cross-sectional view of a catalyst-coated electrolyte membrane using the electrolyte membrane according to the embodiment 2 of the present invention.

### Description of Embodiments

Below, embodiments of the present invention will be described in detail, and the present invention is not limited to the below-described embodiments, but can be performed with various modifications, depending on the purpose or the use. Furthermore, the description of a specific embodiment shown in the drawings can also be understood as a description of the present invention as a broader concept.

That is, the electrolyte membrane according to an embodiment of the present invention is an electrolyte membrane including a layer (A) containing a polymer electrolyte, and a layer (B) existing on at least one of the faces of the layer (A), wherein it is important that a particle concentration (Y1) in an interface region of the layer (B), on the layer (A) side, is higher than a particle concentration (Y2) in another interface region of the layer (B), on the opposite side to the layer (A). Here, the particle concentration (Y1) and the particle concentration (Y2) are ratios of the mass of particles existing in the interface region to the total mass of solids existing in the interface region.

When the layer (B) contains a plurality of types of particles, the particle concentrations (Y1) and (Y2) are calculated as ratios of the mass of particles existing in the interface region to the total mass of solids existing in the interface region.

In the present invention, the interface regions refer to regions in the layer (B), each having a thickness of 10% of the thickness of the entire of the layer (B) from either interface between the layer (B) and other layer adjacent thereto. The relative relationship (magnitude relationship) between the particle concentration (Y1) and the particle concentration (Y2) can be determined by observing a cross-section of the electrolyte membrane with a scanning transmission electron microscope (STEM) or a scanning electron microscope (SEM), or by combining cross-sectional observation using STEM or SEM with elemental analysis (elemental analysis with energy-dispersive X-ray spectroscopy (EDX) or electron probe microanalyzer (EMPA)).

Specifically, first, the presence or absence of particles in the two interface regions of the layer (B) is observed with a TEM or SEM. As a result, when particles exist in both of the two interface regions, the interface regions are subjected to elemental analysis with an EDX or EMPA.

In the above elemental analysis, when elements constituting the particle overlaps with elements constituting an ingredient other than the particle contained in the layer (B) (e.g., a polymer), for example, when the particle is carbon black and the polymer is a perfluorocarbon sulfonic acid polymer, elemental analysis is performed by selecting "C" as the particle element and an element other than "C", for example, "F" or "S", as the polymer element. Then, by calculating and comparing the ratios of C to F or C to S (C/F or C/S) in the two interface regions, the relative relationship between Y1 and Y2 and the ratio of Y2 to Y1 (Y2/Y1) can be determined. Details will be provided in Examples.

### (Embodiment 1)

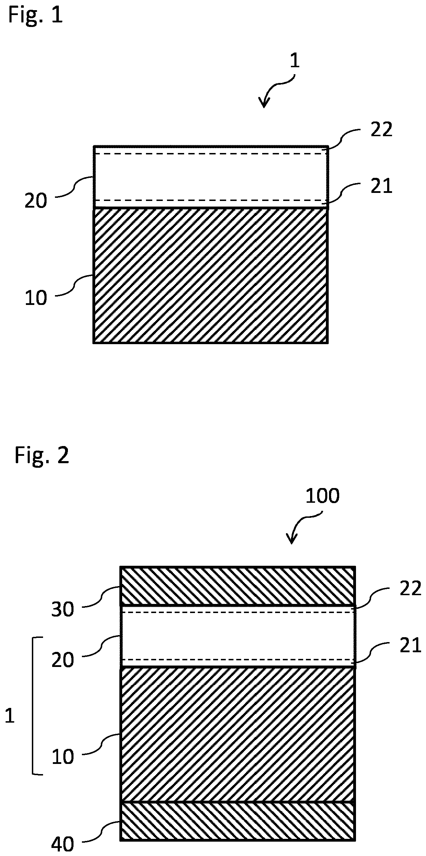

FIG. 1 is a schematic cross-sectional view showing an example of an electrolyte membrane according to an embodiment 1 of the present invention.

In the present embodiment 1, the electrolyte membrane 1 has a constitution in which a layer (B) 20 is laminated on one of the faces of a layer (A) 10. The layer (B) 20 has an interface region 21 on the layer (A) side and an interface region 22 on the opposite side to the layer (A). The layer (B) 20 contains particles, not shown, and the particle concentration in the interface region 21 is the particle concentration (Y1), and the particle concentration in the interface region 22 is the particle concentration (Y2). Further, FIG. 2 is a schematic cross-sectional view showing an example of a catalyst-coated electrolyte membrane having a catalyst layer laminated on each of both faces of the electrolyte membrane of the embodiment 1. Hereinafter, the catalyst-coated electrolyte membrane (catalyst coated membrane) may be abbreviated as "CCM".

The CCM 100 has a constitution in which a catalyst layer 30 is laminated on one face and a catalyst layer 40 is laminated on the other face of both faces of the electrolyte membrane 1. Here, the catalyst layers 30 and 40 are an anode catalyst layer and a cathode catalyst layer, respectively, or vice versa.

The electrolyte membrane according to the present embodiment 1 is characterized in that the particle concentration (Y1) in the interface region 21 of the layer (B) 20, on the layer (A) 10 side, is higher than the particle concentration (Y2) in the interface region 22 of the layer (B) 20, on the opposite side to the layer (A) 10. This improves the joining property between the electrolyte membrane 1 and the catalyst layer 30. The mechanism behind this is not clear, but is speculated to be as follows.

In general, the degree of the particle concentration at the outermost surface of the layer affects the surface roughness (unevenness), with higher particle concentration tending to provide greater surface roughness (unevenness), and lower particle concentration tending to provide smaller surface roughness (unevenness) (higher smoothness). It is believed that the unevenness formed on the outermost surface of the layer functions as an anchor at the joining interface with other layers.

In general, the layer (A) containing a polymer electrolyte 10 has relatively smooth surface, and the catalyst layers 30 and 40 contain catalyst particles and therefore have uneven surfaces. Therefore, an interface region 21 of the layer (B) 20 having a relatively higher particle concentration (particle concentration (Y1)) is counterposed on the layer (A) 10 side having a smooth surface, and an interface region 22 of the layer (B) 20 having relatively lower particle concentration (particle concentration (Y2)) is counterposed on the catalyst layer 30 side having an uneven surface, whereby an anchor effect is developed at both interfaces. Thus, it is considered that the joining property between the layer (A) 10 and the layer (B) 20 and the joining property between the layer (B) 20 and the catalyst layer 30 are individually enhanced.

The present invention is particularly effective when a type of polymer electrolyte included in the layer (A) 10 and a type of polymer electrolyte included in the catalyst layer 30 are different from each other. This is because when the layer (A) 10 and the catalyst layer 30 contain different types of polymer electrolytes, the interlaminar joining tends to decrease.

Here, examples of the types of polymer electrolytes being different from each other include a case where one of them is a hydrocarbon-based polymer electrolyte and the other is a fluorine-based polymer electrolyte, specifically, a case where the layer (A) 10 contains a hydrocarbon-based polymer electrolyte and the catalyst layer 30 contains a fluorine-based polymer electrolyte (embodiment 1), and a case where the layer (A) 10 contains a fluorine-based polymer electrolyte and the catalyst layer 30 contains a hydrocarbon-based polymer electrolyte (embodiment 2). From the viewpoint of water electrolysis capability, the embodiment 1 is preferred.

When the type of polymer electrolyte contained in the layer (A) 10 and the type of polymer electrolyte contained in the catalyst layer 30 are different from each other as in the above-described embodiments 1 and 2, it is preferable that the layer (B) 20 contain the same type of polymer as that of the catalyst layer 30, from the viewpoint of a joining property. Here, the term "the types of the polymers being the same" refers to polymers having the same type of main skeleton, such as polymers being fluorine-based polymers or polymers being hydrocarbon-based polymers, regardless of whether they are ionic or nonionic. For example, an ionic fluorine-based polymer (fluorine-based polymer electrolyte) and a nonionic fluorine-based polymer are the same type of polymers, and similarly, an ionic hydrocarbon-based polymer (hydrocarbon-based polymer electrolyte) and a nonionic hydrocarbon-based polymer are the same type of polymers. From the viewpoint of protonic conductivity, it is more preferable that the layer (B) 20 contain the same type of polymer electrolyte as the polymer electrolyte contained in the catalyst layer 30. The polymer contained in the layer (B) 20 will be described in detail below.

An example of the particularly preferable combination of the materials contained in each of the layer (A), the catalyst layer, and the layer (B) electrolyte membrane is a constitution in which the layer (A) contains a hydrocarbon-based polymer electrolyte, the catalyst layer contains a fluorine-based polymer electrolyte, and the layer (B) contains a fluorine-based polymer.

From the viewpoint of enhancing a joining property between the electrolyte membrane 1 and the catalyst layer 30, a ratio (Y2/Y1) between the particle concentration (Y1) and the particle concentration (Y2) is preferably 0.95 or less, more preferably 0.75 or less, and particularly preferably 0.60 or less. The lower limit of the ratio (Y2/Y1) is 0.00.

From the viewpoint of enhancing the joining property between the layer (A) 10 and the layer (B) 20, the particle concentration (Y1) is preferably 45 mass% or more, more preferably 50 mass% or more, and particularly preferably 55 mass% or more. Further, from the viewpoint of the membrane-forming property of the applied membrane, the particle concentration (Y1) is preferably 90 mass% or less, more preferably 80 mass% or less, still more preferably 75 mass% or less, and particularly preferably 70 mass% or less.

From the viewpoint of enhancing the joining property between the layer (B) 20 and the catalyst layer 30, the particle concentration (Y2) is preferably less than 45 mass%, more preferably less than 40 mass%, and particularly preferably less than 35 mass% within a range satisfying (Y2) > (Y1). The lower limit is 0%.

From the viewpoint of a joining property between the layer (A) 10 and the layer (B) 20 and a joining property between the layer (B) 20 and the catalyst layer 30, it is preferable that the particle concentration (Y1) be 45 mass% or more, and the particle concentration (Y2) be less than 45 mass%.

It is preferable that the particle concentration (Y2) be adjusted depending on the mass ratio (C/I) between the content (C) of the catalyst particles (including catalyst-supporting particles) and the content (I) of the polymer electrolyte, contained in the catalyst layer 30. Generally, surface roughness (unevenness) of the catalyst layer having higher C/I described above tends to be higher, whereas surface roughness (unevenness) of the catalyst layer having lower C/I tends to be lower. In order to improve the anchor effect at the joining surface, it is preferable that particle concentration (Y2) be lower for a catalyst layer having a relatively higher C/I, and it is preferable that particle concentration (Y2) be higher for a catalyst layer having a relatively lower C/I. For example, when the above-described mass ratio(C/I) is 4.0 or more, the particle concentration (Y2) is more preferably less than 45%, still more preferably less than 38%, and particularly preferably less than 35%. On the other hand, when the above-described mass ratio(C/I) is less than 4.0, the particle concentration (Y2) may be less than 45%.

When the layer (B) 20 is placed on only one face of the layer (A) 10, it may be placed only on the anode catalyst layer side or only on the cathode catalyst layer side. When the electrolyte membrane according to the present embodiment 1 is applied to a water electrolysis device, placing the layer (B) 20 on the anode catalyst layer side (the catalyst layer 30 is taken as the anode catalyst layer) is expected to suppress electrochemical oxidation degradation of the layer (A), in addition to improving a joining property. Further, placing the layer (B) 20 on the cathode catalyst layer side (the catalyst layer 30 is taken as the cathode catalyst layer) is expected to protect the layer (A) from peroxide radicals by-produced at the cathode, in addition to improve a joining property.

In the water electrolysis device, the anode is in a high electric potential environment, and it is preferable that the layer (B) on the anode catalyst layer side have a barrier function to inhibit electrochemical oxidation degradation of the layer (A) 10. From this point of view, when the catalyst layer 30 is an anode catalyst layer, the particle concentration (Y2) of the layer (B) 20 on the anode catalyst layer side is preferably relatively lower. Specifically, the particle concentration (Y2) is preferably less than 45 mass%, more preferably less than 38 mass%, still more preferably less than 35 mass%, and particularly preferably 0 mass%.

On the other hand, with regard to the anode catalyst layer (B), from the viewpoint of suppressing interface delamination between the catalyst layer and the layer (B) due to hydrogen generated at the cathode (ensuring an escape route for hydrogen), it is preferable that the particle concentration (Y2) of the layer (B) 20 on the cathode catalyst layer side be relatively higher, when the catalyst layer 30 is a cathode catalyst layer. Specifically, the particle concentration (Y2) is more preferably 30 mass% or more, and still more preferably 35 mass% or more. The upper limit of the particle concentration (Y2) is preferably less than 45 mass%.

Furthermore, in the water electrolysis device, the content ratio of the catalyst particles to the polymer electrolyte in the anode catalyst layer is set to be relatively high, which makes it difficult to obtain a joining property between the anode catalyst layer and the layer (A). Therefore, placing the layer (B) on the anode catalyst layer side is more useful from the viewpoint of improving the joining property. Thus, it is more preferable that the catalyst layer 30 be an anode catalyst layer.

Furthermore, in the water electrolysis device, since the content ratio of the catalyst particles to the polymer electrolyte in the cathode catalyst layer is set to be relatively low, the strength level of the joining property between the cathode catalyst layer and the layer (A) is not as low as that on the anode side. Therefore, joining property can also be enhanced by placing a single layer with a particle concentration of 30 mass% or more and 80 mass% or less in place of the layer (B) on the cathode catalyst layer side. Hereinafter, the single layer used in place of the layer (B) on the cathode catalyst layer side is referred to as a "layer (C)". In this case, the electrolyte membrane 1 in the present embodiment 1 has a constitution in which a layer (B), a layer (A), and a layer (C), not shown, are laminated in this order. Specifically, in FIG. 2, a catalyst layer 30 corresponds to an anode catalyst layer, a catalyst layer 40 corresponds to a cathode catalyst layer, and the constitution includes a layer (C), not shown, disposed between the catalyst layer 40 as the cathode catalyst layer and a layer (A) 10.

The particle concentration of the layer (C) is more preferably 40 mass% or more and 75 mass% or less, and particularly preferably 45 mass% or more and 70 mass% or less. The particles to be contained in the layer (C) are preferably carbon particles. The carbon particles contained in the layer (C) are expected to have an effect of decomposing or capturing peroxide radicals that are by-produced at the cathode. Accordingly, they are expected to have an effect of protecting the layer (A) from peroxide radicals.

### (Embodiment 2)

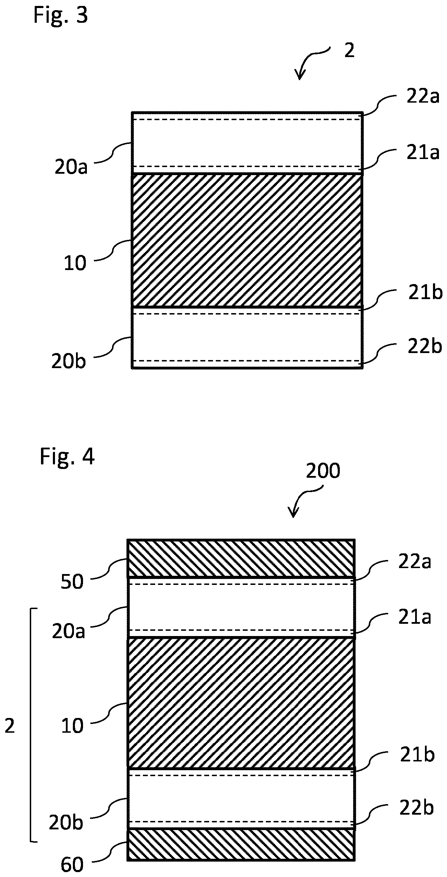

FIG. 3 is a schematic cross-sectional view showing an example of an electrolyte membrane according to an embodiment 2 of the present invention. In the present embodiment 2, the electrolyte membrane 2 has a constitution in which a layer (B) 20a is laminated on one of the faces of the layer (A) 10, and another layer (B) 20b is laminated on the opposite face.

The layer (B) 20a has an interface region 21a on the layer (A) 10 side and an interface region 22a on the opposite side to the layer (A) 10. The layer (B) 20b has an interface region 21b on the layer (A) 10 side and an interface region 22b on the opposite side to the layer (A) 10. The layers (B) 20a and 20b contain particles, not shown, and the particle concentration in the interface regions 21a and 21b is the particle concentration (Y1), and the particle concentration in the interface regions 22a and 22b is the particle concentration (Y2). To make a distinction, the particle concentrations in the interface regions 21a and 21b are referred to as (Y1-a) and (Y1-b), respectively, and the particle concentrations in the interface regions 22a and 22b are referred to as (Y2-a) and (Y2-b), respectively. (Y1-a) and (Y1-b), and (Y2-a) and (Y2-b) each may be identical or different from each other. In this case, the particle concentration (Y1) being higher than the particle concentration (Y2) means (Y1-a) > (Y2-a) and/or (Y1-b) > (Y2-b). Further, FIG. 4 is a schematic cross-sectional view showing an example of a catalyst-coated electrolyte membrane (CCM) having a catalyst layer laminated on each face of the electrolyte membrane of the embodiment 2.

Further, CCM 200 has a constitution in which an anode catalyst layer 50 is laminated on the layer (B) 20a side and a cathode catalyst layer 60 is laminated on the layer (B) 20b side of the electrolyte membrane of the embodiment 2.

In the present embodiment 2, the relation (Y1) > (Y2) is preferably satisfied at least in the layer (B) 20a on the anode catalyst layer 50 side, and more preferably satisfied both in the layer (B) 20a on the anode catalyst layer 50 side and in the layer (B) 20b on the cathode catalyst layer 60 side. That is, preferably (Y1-a) > (Y2-a), and more preferably (Y1-a) > (Y2-a) and (Y1-b) > (Y2-b).

The particle concentration (Y2-a) in the layer (B) 20a on the anode catalyst layer 50 side is preferably smaller than the particle concentration (Y2-b) in the layer (B) 20b on the cathode catalyst layer 60 side. Particularly preferably, the particle concentration (Y2-a) in the layer (B) 20a adjacent to the anode catalyst layer 50 is less than 35% and the particle concentration (Y2-b) in the layer (B) 20b adjacent to the cathode catalyst layer 60 is less than 45%.

Hereinafter, matters common to embodiments included in the present invention will be described in detail.

### [Layer (A)]

The layer (A) contains a polymer electrolyte. Examples of the polymer electrolyte include fluorine-based polymer electrolytes and hydrocarbon-based polymer electrolytes. From the viewpoint of water electrolysis capability, the hydrocarbon-based polymer electrolytes are preferred.

Here, the fluorine-based polymer electrolyte is a fluorine-based polymer having an ionic group. The fluorine-based polymer means a polymer in which the majority or all of the hydrogen atoms in an alkyl group and/or in an alkylene group in the polymer are replaced with a fluorine atom. Representative examples of the fluorine-based polymer electrolyte include commercially available products such as "Nafion" (registered trademark) (manufactured by DuPont de Nemours, Inc.), "FLEMION" (registered trademark) (manufactured by AGC Inc.), and "ACIPLEX" (registered trademark) (manufactured by Asahi Kasei Corp.).

The hydrocarbon-based polymer electrolyte is a hydrocarbon-based polymer having an ionic group. For the hydrocarbon-based polymer, an aromatic hydrocarbon-based polymer having an aromatic ring in the main chain is preferable. Here, the aromatic ring may contain not only a hydrocarbon-based aromatic ring but also a hetero ring or the like. In addition, an aliphatic-based unit together with an aromatic ring unit may partially constitute the polymer.

Specific examples of the aromatic hydrocarbon-based polymer include polymers having, in the main chain, a structure selected from polysulfone, polyether sulfone, polyphenylene oxide, a polyarylene ether polymer, polyphenylene sulfide, polyphenylene sulfide sulfone, polyparaphenylene, a polyarylene polymer, polyarylene ketone, polyether ketone, polyarylene phosphine oxide, polyether phosphine oxide, polybenzoxazole, polybenzothiazole, polybenzimidazole, polyamide, polyimide, polyetherimide, and polyimidesulfone together with an aromatic ring. Note that polysulfone, polyether sulfone, polyether ketone, and the like as used herein are generic terms for structures having a sulfone bond, an ether bond, or a ketone bond in their molecular chain, encompass polyether ketone ketone, polyether ether ketone, polyether ether ketone ketone, polyether ketone ether ketone ketone, and polyether ketone sulfone. The hydrocarbon skeleton may have a plurality of structures out of these structures. Among these, in particular, a polymer having a polyether ketone skeleton, that is, a polyether ketone-based polymer is most preferable as an aromatic hydrocarbon-based polymer.

A preferable hydrocarbon-based polymer electrolyte is a block copolymer having one or more segments containing an ionic group (A1) and one or more segments containing no ionic group segment (A2). Here, a segment is defined as a partial structure in the chain of a copolymer composed of a repeating unit that exhibits a specific property, the partial structure having a molecular weight of 2,000 or more. Using a block copolymer makes it possible to develop a co-continuous phase-separation structure having a fine domain, compared with a polymer blend, and to achieve a more excellent power-generating performance and physical durability.

Hereinafter, a segment (A1) or polymer containing an ionic group is referred to as an "ionic block" in some cases, and in addition, a segment (A2) or polymer containing no ionic group is referred to as a "nonionic block" in some cases. The expression "containing no ionic group" as used herein does not exclude an aspect in which the segment or polymer contains an ionic group in a small amount to the extent that the effects of the present invention are not impaired.

The ionic group possessed by the polymer electrolyte can be an ionic group having proton exchange ability. As such a functional group, a functional group selected from a sulfonic group, sulfonimide group, sulfate group, phosphonic group, phosphate group, and carboxylate group is preferably used. The polymer can contain two or more kinds of ionic groups. Among these, the polymer more preferably has at least one selected from a sulfonic group, sulfonimide group, or sulfate group from the viewpoint of high protonic conductivity, and most preferably has a sulfonic group from the viewpoint of raw material cost.

The ion exchange capacity (IEC) of the polymer electrolyte is preferably 0.1 meq/g or more and 5.0 meq/g or less from the viewpoint of a balance between protonic conductivity and water resistance. The IEC is more preferably 1.4 meq/g or more, still more preferably 2.0 meq/g or more. In addition, the IEC is more preferably 3.5 meq/g or less, still more preferably 3.0 meq/g or less. When the IEC is less than 0.1 meq/g, the protonic conductivity may be insufficient. When the IEC is more than 5. 0meq/g, the water resistance may be insufficient.

Here, the IEC is the molar amount of the ionic group introduced per the unit dry weight of the polymer electrolyte. A large value of this represents a larger amount of the ionic group introduced. In the present invention, the IEC is defined as a value determined by a neutralization titration method. The IEC in accordance with neutralization titration can be calculated by the method described in the Examples section (2).

In the present invention, an aromatic hydrocarbon-based block copolymer is particularly preferably used as the polymer electrolyte as a hydrocarbon-based polymer electrolyte, and a polyether ketone-based block copolymer is more preferable. In particular, such a polyether ketone-based block copolymer containing a segment containing a constituent unit (S1) containing an ionic group and a segment containing a constituent unit (S2) containing no ionic group, as below-described, can be particularly preferably used.

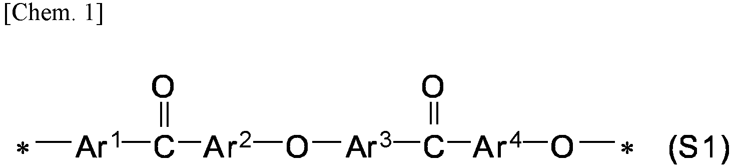

In the general formula (S1), Ar¹ to Ar⁴ represent an arbitrary divalent arylene group, Ar¹ and/or Ar² contain(s) an ionic group, and Ar³ and Ar⁴ may contain or optionally do not contain an ionic group. Ar¹ to Ar⁴ may be optionally substituted, and may each independently two or more arylene groups. The symbol * represents a binding site with the general formula (S1) or with another constituent unit.

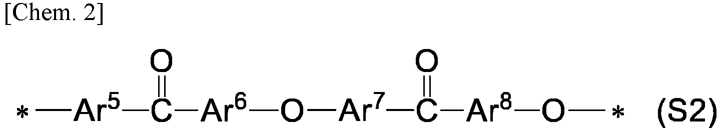

In the general formula (S2), Ar⁵ to Ar⁸ represent an arbitrary divalent arylene group, and may be optionally substituted, but contain no ionic group. Ar⁵ to Ar⁸ may each independently two or more arylene groups. The symbol * represents a binding site with the general formula (S2) or with another constituent unit.

Here, examples of the divalent arylene group preferable for Ar¹ to Ar⁸ include, but are not limited to: hydrocarbon-based arylene groups such as a phenylene group, naphthylene group, biphenylene group, and fluorenediyl group; and heteroarylene groups such as pyridinediyl, quinoxalinediyl, and thiophenediyl; and the like. Here, the "phenylene group" can encompass three kinds thereof, that is, an o-phenylene group, m-phenylene group, and p-phenylene group, in accordance with the position having a binding site between a benzene ring and another constituent unit, but is used as the generic term for these three kinds unless otherwise specified herein. The same applies to another divalent arylene group, such as a "naphthylene group" or a "biphenylene group". Ar¹ to Ar⁸ are preferably a phenylene group and a phenylene group containing an ionic group, most preferably a p-phenylene group and a p-phenylene group containing an ionic group. In addition, Ar⁵ to Ar⁸ may be substituted with a group other than an ionic group, more preferably unsubstituted, from the viewpoints of protonic conductivity, chemical stability, and physical durability.

In addition, to obtain sufficient dimensional stability, mechanical strength, physical durability, fuel blocking properties, and solvent resistance, the polymer electrolyte is preferably an aromatic hydrocarbon-based polymer having crystallinity. Here, "having crystallinity" means having a property of crystallizability, that is, a possibility of being crystallized by heating, or means being already crystallized.

The presence or absence of a property of crystallizability that allows crystallization upon heating can be confirmed by the heat of crystallization of 0.1 J/g or more as measured by Differential Scanning Calorimetry (DSC) after the formation of the membrane. Being already crystallized can be confirmed by the crystallinity being 0.5% or more, as measured by wide-angle X-ray diffraction. That is, in the present invention, it is preferable that the heat of crystallization is 0.1 J/g or more, as measured by Differential Scanning Calorimetry (DSC) after the formation of the membrane, or that the crystallinity is 0.5% or more, as measured by wide-angle X-ray diffraction.

With an aromatic hydrocarbon-based polymer having crystallinity, the electrolyte membrane has a poor processability in some cases. In such a case, the aromatic hydrocarbon-based polymer may have a protecting group introduced therein, and be temporarily inhibited from being crystalline. Specifically, the polymer with a protecting group introduced therein is formed into a membrane, and then deprotected. Thus, the aromatic hydrocarbon-based polymer having crystallinity can be used as a polymer electrolyte in the present invention.

When the electrolyte membrane according to the embodiment of the present invention is applied to a water electrolysis device, from the viewpoint of improving water electrolysis capability, it is preferable that the layer (A) contain a hydrocarbon-based polymer electrolyte as the polymer electrolyte. Further, from the viewpoint described above, the content of the hydrocarbon-based polymer electrolyte is preferably 60 mass% or less, more preferably 80 mass% or less, still more preferably 90 mass% or less, and particularly preferably 100 mass%, with respect to the total mass of the polymer electrolyte in the layer (A).

The layer (A) may be reinforced with a porous base material. Examples of the form of the porous base material include woven fabrics, nonwoven fabrics, porous films, mesh fabrics, and the like. As the material for the porous base material, a known material such as a hydrocarbon-based porous base material or a fluorine-based porous base material can be used.

The layer (A) can contain any of various additives, for example, a surfactant, radical scavenger, hydrogen peroxide decomposer, nonelectrolyte polymer, elastomer, filler, or the like to the extent that the effects of the present invention are not impaired.

In a case where an electrolyte membrane according to the present invention is used for a water electrolysis device, the layer (A) preferably has a comparatively larger thickness, and specifically, the thickness is preferably 30 µm or more, more preferably 50 µm or more, particularly preferably 70 µm or more. In addition, the thickness is preferably 250 µm or less, more preferably 200 µm or less, particularly preferably 175 µm or less.

### [Layer (B)]

The layer (B) has a capability to enhance the joining property between the layer (A) and the catalyst layer, that is, the capability to serve as a joining layer. The layer (B) has an interface region on the layer (A) side and an interface region on the opposite side to the layer (A), and the particle concentrations in these two interface regions are different from each other. Such a layer (B) may be constituted by a single layer, or may have a laminated constitution of two or more layers.

The electrolyte membrane according to the embodiment of the present invention has the layer (B), which can enhance the joining property between the polymer electrolyte membrane and the catalyst layer. When the electrolyte membrane is applied to a water electrolysis device, the enhanced joining property suppresses delamination or reduction in adhesiveness between the electrolyte membrane and the catalyst layer during operation. As a result, reduction in the protonic conductivity of the water electrolysis device is suppressed, for example. Therefore, the durability of the water electrolysis device is improved, for example, the operating voltage of the water electrolysis device can be maintained for a long period of time without increasing.

It is preferable that the layer (B) further contain a polymer. When the layer (B) contains a polymer, the membrane-forming property and membrane strength can be improved.

When the layer (B) is a single layer, for example, in a process of applying and drying a coating liquid containing particles and a polymer on the layer (A) that is horizontally placed or transported, the particle concentration (Y2) can be made higher than the particle concentration (Y1) by performing an operation to increase the particle density on the layer (A) side. Examples of the operation described above include a method of making the viscosity of the coating liquid comparatively lower using particles having sufficiently higher specific gravity than that of the polymer and decreasing drying speed to make it easy for the particles to precipitate, and a method of causing phase separation between the particles and the polymer. Examples of the method of causing phase separation include a method in which particles and a polymer having a surface tension sufficiently lower than that of the particles and being incompatible with the particles are used, and a solvent having relatively high compatibility with the particles is used, thereby making it easier for the polymer to be unevenly distributed at the air interface at the time of phase separation during drying.

It is preferable that the layer (B) have a laminated constitution. When the layer (B) has a laminated constitution, the particle concentration (Y1) and the particle concentration (Y2) can be easily controlled. For example, by applying a plurality of types of coating liquids having different particle concentrations onto the layer (A), a layer (B) having a laminated constitution in which the particle density differs from layer to layer is formed. The details of the producing method are discussed below. When the layer (B) has a laminated constitution composed of n layers, they are called layer (B-1), layer (B-2), ..., layer (B-n) in this order from the layer (A) side. When the layer (B) has a laminated constitution, it is preferred that the particle concentration in the layer (B-1) adjacent to the layer (A) be the highest.

When the layer (B) has a laminated constitution, a two layer constitution or a three layer constitution is preferable, and a two layer constitution is more preferable. When the layer (B) has a two layer constitution, the layer adjacent to the layer (A) is a layer (B-1) and the layer on the opposite side to the layer (A) is a layer (B-2). Below, embodiments of the two layer constitution will be described, and the present invention is not limited thereto.

The layer (B-1) in the two layer constitution is a layer including an interface region on the layer (A) side. That is, the layer (B-1) is a layer that provides a particle concentration (Y1) in the interface region on the layer (A) side. The layer (B-2) is a layer including an interface region on the opposite side to the layer (A). That is, the layer (B-2) is a layer that provides a particle concentration (Y2) in the interface region on the opposite side to the layer (A).

The particle concentration (Y2) includes 0%, and in this case, the layer (B-2) has a constitution including no particles. In a case where the layer (B) has a two layer constitution, the layer (B-2) includes an embodiment containing no particles as described above. However, such a case still falls under the category of a case where "the layer (B) contains particles" because the layer (B-1) contains particles.

The particle concentration of the layer (B-1) is preferably 45 mass% or more, more preferably 50 mass% or more, and particularly preferably 55 mass% or more. The particle concentration of the layer (B-2) is preferably less than 45 mass%, more preferably less than 38 mass%, and particularly preferably less than 35 mass%.

The layer (B-1) and the layer (B-2) can be formed, for example, by uniformly applying a coating liquid, individually prepared so as to have the above-mentioned particle concentration, under general conditions. At this time, the particle concentrations (ratio of the mass of particles to the total mass of solids) in the coating liquids forming the layer (B-1) and the layer (B-2) are the particle concentration of the layer (B-1) and the particle concentration of the layer (B-2), respectively. That is, by controlling the particle concentrations in the respective coating liquids, it is possible to impart desired particle concentrations to the layer (B-1) and the layer (B-2). Accordingly, the particle concentration (Y1) in the interface region on the layer (A) side can be higher than the particle concentration (Y2) in the interface region of the layer (B) on the opposite side to the layer (A).

Examples of the particles contained in the layer (B) include inorganic particles, organic particles, organic-inorganic composite particles, and the like.

Examples of the inorganic particles include carbon particles, silica, titanium oxide, aluminum oxide, zirconium oxide, cerium oxide, calcium carbonate, zeolite, mica, sericite, sericite, kaolin clay, kaolin, mica, talc, and montmorillonite.

Among the inorganic particles described above, carbon particles are preferred because of being comparatively stable against acid and alkali. Examples of the carbon particles include particles of carbon black, graphite, activated carbon, carbon nanotubes, carbon nanofibers, and fullerene.

Examples of the organic particles include various resin particles. Examples of a resin constituting such resin particles include thermoplastic resins and thermosetting resins such as polyethylene resins, polypropylene resins, polyvinyl acetate-based resins, poly(meth)acryl-based resins, polyvinyl chloride-based resins, polystyrene-based resins, polycarbonate-based resins, polyester-based resins, polyphenylene sulfide-based resins, polyamide-based resins, polyimide-based resins, polyurethane-based resins, ethylene-(meth)acrylic acid ester-based copolymer, ABS resins, fluorine-based resins, epoxy-based resins, phenol-based resins, melamine-based resins, guanamine resins, polyazole-based resins, polyether sulfone-based resins, and polyether ketone-based resins.

Examples of the organic-inorganic composite particles include acryl-silica composite particles, melamine-silica composite particles, benzoguanamine-silica composite particles, benzoguanamine-melamine-silica composite particles, polystyrene-silica composite particles, silsesquioxane-based organic-inorganic hybrid particles, organic substance-coated inorganic nanoparticles, and the like.

Among the above-described particles, inorganic particles are preferred, carbon particles are more preferred, and carbon black is particularly preferred.

The average particle size of the particles is preferably 5 nm or more, more preferably 10 nm or more, and particularly preferably 20 nm or more, from the viewpoints of formation of pores useful for joining, dispersibility, and a membrane-forming property. In addition, the average particle diameter is preferably 1,000 nm or less, more preferably 500 nm or less, and particularly preferably 200 nm or less.

When a polymer is contained in the layer (B), a nonionic polymer or an ionic polymer can be used as the polymer. These polymers may be used alone or in combination of several polymers.

Examples of the nonionic polymer include a fluorine-based polymer and a hydrocarbon-based polymer. Examples of the nonionic fluorine-based polymer include polytetrafluoroethylene, poly(vinylidene fluoride), copolymer of vinylidene fluoride and hexafluoropropylene, copolymer of vinylidene fluoride and trifluoroethylene, copolymer of vinylidene fluoride and tetrafluoroethylene, and poly(vinylidene fluoride).

Examples of the nonionic hydrocarbon-based polymer include polysulfone, polyether sulfone, polyphenylene oxide, polyarylene ether, polyphenylene sulfide, polyphenylene sulfide sulfone, polyparaphenylene, polyarylene polymer, polyarylene ketone, polyether ketone, polyarylene phosphine oxide, polyether phosphine oxide, polybenzoxazole, polybenzothiazole, polybenzimidazole, polyamide, polyimide, polyetherimide, polyimidesulfone, and polyvinyl alcohol.

Examples of the ionic polymer include an ionic fluorine-based polymer and an ionic hydrocarbon-based polymer. Examples of these polymers include polymers listed as examples of the fluorine-based polymer electrolyte and hydrocarbon-based polymer electrolyte mentioned above.

Among them, the nonionic or ionic fluorine-based polymer is preferred from the viewpoint of imparting a barrier function in a high electric potential environment to the layer (B), and the ionic hydrocarbon-based polymer and the ionic fluorine-based polymer are preferred from the viewpoint of enhancing protonic conductivity. That is, when the polymer is contained in the layer (B), from the viewpoint of described above, the ionic fluorine-based polymer electrolyte is most preferred. Here, as the ionic fluorine-based polymer, the polymers listed as examples of the fluorine-based polymer electrolyte mentioned above are preferably used.

When the layer (B) has a laminated constitution, the types of particles and polymers to be contained in each layer may be the same or different. However, from the viewpoint of the joining property in the layer (B), they are preferably the same.

For example, when the layer (B) is composed of two layers: a layer (B-1) imparting a particle concentration (Y1) and a layer (B-2) imparting a particle concentration (Y2), and both the layer (B-1) and the layer (B-2) contain particles, that is, when a ratio (Y2/Y1) of the particle concentration (Y2) to the particle concentration (Y1) is more than 0.00, it is preferable that both the layer (B-1) and the layer (B-2) contain the same type of particles. Such particles are preferably carbon particles.

The layer (B) can contain any of various additives, for example, a surfactant, radical scavenger, hydrogen peroxide decomposer, nonelectrolyte polymer, elastomer, or the like to the extent that the effects of the present invention are not impaired.

The thickness of the layer (B) is preferably 0.5 µm or more, more preferably 0.8 µm or more, and particularly preferably 1 µm or more, from the viewpoint of enhancing the joining property. In addition, the thickness is preferably 20 µm or less, more preferably 15 µm or less, and particularly preferably 10 µm or less, from the viewpoint of ensuring good protonic conductivity.

Particularly, it is preferable that a thickness of the layer (A) is 30 µm or more and 250 µm or less, and a thickness of the layer (B) is 0.5 µm or more and 20 µm or less.

When the layer (B) has a laminated constitution, the layers constituting the layer (B) may have the same thickness or different thicknesses. For example, when the layer (B) has a two layer constitution, the thickness of the layer (B-1) is preferably in the range of 0.25 µm to 10 µm, more preferably in the range of 0.4 µm to 7.5 µm, and particularly preferably in the range of 0.5 µm to 5 µm. The thickness of the layer (B-2) is preferably in the range of 0.25 µm to 10 µm, more preferably in the range of 0.4 µm to 7.5 µm, and particularly preferably in the range of 0.5 µm to 5 µm. When the layer (B) has a two layer constitution, each of the thicknesses of the layer (B-1) and layer (B-2) is preferably 10% or more of the total thickness of the layer (B). Note that the thickness of the layer can be measured by a contact-type film thickness measuring method or a measurement through SEM observation described in Examples.

### [Method of Producing Electrolyte Membrane]

Below, a method of producing the electrolyte membrane will be described, and the present invention is not limited to the producing method.

First, a method of producing the layer (A) will be described. The layer (A) can be formed, for example, by the coating method or melt extrusion method. Among them, the coating method is preferred. Below, the coating method will be described as an example, and the present invention is not limited thereto.

The layer (A) can be produced, for example, by coating a membrane-formation base material such as polyethylene terephthalate (PET) film with a polymer electrolyte solution, and drying the solution.

The layer (A) may be what is called a "composite membrane" reinforced with a porous base material. This composite membrane preferably has a polymer electrolyte layer on one or both of the faces of the porous base material impregnated with a polymer electrolyte. Examples of a method of producing the above-described composite membrane include a method in which a porous base material is attached to and impregnated with a polymer electrolyte solution applied to a membrane-formation base material, and furthermore, the porous base material is coated with a polymer electrolyte solution, which is then dried.

In addition, examples of a polymer electrolyte that can be used include a salt formed by an ionic group with a cation of an alkali metal or an alkaline earth metal. In this case, it is preferable that, after the electrolyte membrane is formed on the membrane-formation base material, an acid treatment is performed to exchange the cation of the alkali metal or the alkaline earth metal with a proton. Here, a known method can be adopted as the acid treatment.

An electrolyte membrane according to an embodiment of the present invention is produced by laminating the layer (B) on the layer (A) produced as described above. A laminating method is not particularly limited. For example, a coating method, a transferring method, and a combination of a coating method and a transferring method can be adopted.

The coating method is a method in which a coating liquid for the layer (B) is applied to the layer (A) formed on the membrane-formation base material, and then dried for lamination. The transferring method is a method in which a transfer sheet including a layer (B) laminated on a transfer base material and a layer (A) formed on a membrane-formation base material are hot-pressed to transfer the layer (B) to the layer (A).

When the layer (B) has a laminated constitution, a method can be adopted, in which a plurality of types of coating liquids having different particle concentrations are sequentially applied to the layer (A) formed on the membrane-formation base material. Specifically, a method can be adopted, in which a coating liquid for a layer (B-1) having a high particle concentration is applied, and, without drying or after drying, a coating liquid for the layer (B-2) having a low particle concentration is applied, and then dried. A method can also be adopted, in which two coating liquids having different particle concentrations are prepared, and the two coating liquids are simultaneously applied to the layer (A) using a multilayer die or a multilayer slide coater, and then dried.

As the transferring method, a method can be adopted, in which a layer (B) transfer sheet including a layer (B-2) and a layer (B-1) laminated in this order on a transfer base material and a layer (A) formed on a membrane-formation base material are hot-pressed to transfer the layer (B-1) and the layer (B-2) to the layer (A).

Among the above-described methods, the coating method is more preferable because it provides a high joining property with the layer (A) and can suppress interface resistance. The coating method is not particularly limited as long as it is a method capable of coating the desired shape. For example, die-coating, screen coating, spray coating, gravure coating, and slide coating can be used.

Regarding a method of producing an electrolyte membrane including the layer (B) laminated on both of faces of the layer (A), a coating method, a transferring method, and a combination of a coating method and a transferring method can be adopted. In the following producing method, the layer (B) laminated on one face of the layer (A) is called a first layer (B) and the layer (B) laminated on the other face of the layer (A) is called a second layer (B).

An exemplary producing method using a coating method is a method including: Step (1-1) in which a coating liquid for the first layer (B) is applied, dried, and laminated on the layer (A) formed on the membrane-formation base material; Step (1-2) in which the membrane-formation base material is peeled off to expose the surface of the layer (A) on the opposite side to the first layer (B); and Step (1-3) in which a coating liquid for the second layer (B) is applied to the exposed layer (A) and dried for lamination. A step of laminating a protective base material on the first layer (B) can be provided between the steps (1-1) and (1-3) described above. As the protective base material, those similar to the membrane-formation base material or the transfer base material, or a resin film with a slightly adhesive layer laminated thereon can be used.

An exemplary producing method using the transferring method is a method including: Step (2-1) in which a first layer (B) transfer sheet with a first (layer B) laminated on a transfer base material and a second layer (B) transfer sheet with a second layer (B) laminated on the transfer base material are individually obtained; Step (2-2) in which a membrane-formation base material is peeled off the layer (A) formed on the membrane-formation base material; and Step (2-3) in which the first layer (B) transfer sheet and the second layer (B) transfer sheet are hot-pressed with the layer (A) sandwiched therebetween.

An exemplary producing method using a combination of the coating method and the transferring method is a method including: Step (3-1) in which a coating liquid for the first layer (B) is applied, dried, and laminated on the layer (A) formed on the membrane-formation base material; Step (3-2) in which a second layer (B) transfer sheet with a second layer (B) laminated on a transfer base material is obtained; Step (3-3) in which the membrane-formation base material is peeled off the layer (A) formed on the membrane-formation base material to expose a surface of the layer (A) on the opposite side to the first layer (B); and Step (3-4) in which a second layer (B) transfer sheet is brought into contact with the exposed layer (A) and hot-pressed. A step of laminating a protective base material on the first layer (B) can be provided between the steps (3-1) and (3-4) described above.

Modified examples of the producing method using the combination method include a producing method in which a first layer (B) is laminated by the transferring method, and a second layer (B) is laminated by the coating method.

In the above-described producing method, either the first layer (B) or the second layer (B) may have a laminated constitution of layers (B-1) and (B-2), or both layers may have a laminated constitution.

In the step of producing a CCM, a method can be adopted which includes laminating a layer (B) together with a catalyst layer on a layer (A). Details will be described later.

The method for producing the coating liquid for the layer (B) is not particularly limited as long as it is a method that can provide a desired coating liquid. For example, stirring with a stirrer tip, disintegration with a homogenizer, homogenization with a planetary mixer, or dispersion with a bead mill or a ball mill can be used.

The solvent contained in the coating liquid for the layer (B) is not particularly limited as long as it is a solvent that disperses the particles and polymer, but preferably is a solvent that can be easily removed by evaporation through heating. For example, it is a solvent having a boiling point of 140°C or less. As the solvent of the coating liquid for the layer (B), specifically, water; alcohols such as methanol, ethanol, 1-propanol, 2-propanol, 1-butanol, 2-butanol, isobutyl alcohol, tert-butyl alcohol, and pentanol; ketones such as acetone, methyl ethyl ketone, pentanone, hexanone, heptanone, cyclohexanone, methylcyclohexanone, acetonylacetone, and diisobutyl ketone; ethers such as tetrahydrofuran, dioxane, diethylene glycol dimethyl ether, anisole, methoxytoluene, and dibutyl ether; esters such as methyl acetate, ethyl acetate, n-propyl acetate, isopropyl acetate, butyl acetate, methyl lactate, ethyl lactate, and butyl lactate; and other substances such as dimethylformamide, dimethylacetamide, N-methyl pyrrolidone, ethylene glycol, propylene glycol, diethylene glycol, diacetone alcohol, 1-methoxy-2-propanol may be used singly or as a mixture of two or more of them.

After the layer (A) is coated with the coating liquid for the layer (B), a drying step may be performed as necessary, thereby forming the layer (B). **In** the drying step, a coating film is heated to evaporate a solvent. A heating means is not particularly limited so long as it can heat a polymer electrolyte membrane that is fixed. For example, a heating device such as an oven or a heater, or a device that controls the temperature in the vicinity of the polymer electrolyte membrane using infrared rays, hot air, or the like can be used. Further, heat can be conducted to the polymer electrolyte membrane through a fixing means. The heating temperature range is preferably close to the boiling point of the solvent and equal to or lower than the glass transition temperature of the polymer electrolyte membrane. It is also possible to remove the solvent by simply reducing pressure or introducing an air flow without heating, or even to omit the drying step.

The layer (B) transfer sheet can be produced by applying the coating liquid for the layer (B) on a transfer base material, and performing a drying step as necessary. For the drying step, the above-mentioned method can be used. Subsequently, a face of the layer (B) transfer sheet on which the layer (B) is applied is superposed on the layer (A), and hot-pressed to laminate the layer (B) on the layer (A). The temperature and pressure of the hot-pressing may be appropriately selected depending on the thickness and moisture content of the layer (A), the thickness of the layer (B), and the type of the transfer base material. From the viewpoints of industrial productivity, suppression of thermal decomposition of the polymer electrolyte, and the like, the hot-pressing is preferably performed in the range of 120°C to 250°C. Specifically, it is more preferable to perform the hot-pressing at a temperature higher than the glass transition temperature of the polymer contained in the layer (B) and 200°C or less. The pressure in the hot-pressing is preferably as weak as possible from the viewpoint of protecting the electrolyte membrane. For example, the pressure is preferably in the range of 2 to 10 MPa for the plate press.

As a transfer base material, resin films and substrates similar to those used in the film formation of layer (A) can be used, and fluororesin films made of fluororesins such as polytetrafluoroethylene, ethylene-tetrafluoroethylene copolymer, ethylene-hexafluoropropylene copolymer, tetrafluoroethylene-perfluoro(alkyl vinyl ether) copolymer, polyvinylidene fluoride, polyimide, and polyphenylene sulfide can also be used. The transfer base material may be a base material such as a resin film on which a release layer containing a known releasing agent such as a fluorine-based releasing agent is laminated in order to improve releasability. As the transfer base material used in the present invention, polyimide, polyphenylene sulfide, and fluororesin films are preferred from the viewpoint of chemical stability in addition to heat resistance and solvent resistance, and fluororesin films are more preferred from the viewpoints of releasability.

### [Catalyst-Coated Electrolyte Membrane (CCM)]

An electrolyte membrane according to an embodiment of the present invention can have a catalyst layer disposed on one face or each of both faces thereof, and be thus formed into a CCM. That is, the catalyst-coated electrolyte membrane includes a catalyst layer on one face or each of both faces of the electrolyte membrane.

### [Catalyst Layer]

The catalyst layer is commonly a layer containing catalyst particles and a polymer electrolyte. The catalyst layer is formed as follows: to a polymer electrolyte solution, catalyst particles are further added to form a coating liquid for the catalyst layer; and the coating liquid is laminated on an electrolyte membrane by a coating method or a transferring method to form the catalyst layer. As the polymer electrolyte, the above-described hydrocarbon-based polymer electrolyte or fluorine-based polymer electrolyte can be used. From the viewpoints of gas diffusivity and chemical durability, a fluorine-based polymer electrolyte is preferred, and perfluorocarbonsulfonic acid-based polymer is more preferred. It is preferable that a type of polymer electrolyte included in the layer (A) and a type of polymer electrolyte included in the catalyst layer of the electrolyte membrane be different from each other. It is preferable that the layer (B) contain the same type of polymer as that of the catalyst layer. Further, it is more preferable that the layer (A) contain a hydrocarbon-based polymer electrolyte, the catalyst layer contain a fluorine-based polymer electrolyte, and the layer (B) contain a nonionic or ionic fluorine-based polymer. It is particularly preferable that the layer (B) contain an ionic fluorine-based polymer.

Examples of catalyst particles to be commonly used include: particles of a metal such as an element of the platinum group (platinum, ruthenium, rhodium, palladium, osmium, or iridium), iron, lead, gold, silver, copper, chromium, cobalt, nickel, manganese, vanadium, molybdenum, gallium, or aluminum; an alloy, oxide, or multiple oxide thereof; or the like. In addition, carbon particles on which the above-described metal is supported (catalyst-supporting carbon particles) are also commonly used. The above-described carbon particles are not particularly limited as long as the carbon particles are microparticulate and electroconductive and are not corroded or deteriorated by a reaction with a catalyst, and particles of carbon black, graphite, activated carbon, carbon fiber, carbon nanotubes, and fullerene can be preferably used.

In the catalyst layer, the mass ratio (C/I) between the content (C) of the catalyst particles (including catalyst-supporting particles) and the content (I) of the polymer electrolyte is generally in the range of 1.0 to 15.0, and preferably in the range from 1.5 to 13.0.

When applied to water electrolysis devices, a mass ratio (C/I) in the anode catalyst layer is preferably 4.0 or more, more preferably 5.0 or more, and particularly preferably 7.0 or more. In addition, the ratio is preferably 15.0 or less, more preferably 14.0 or less, and particularly preferably 13.0 or less. On the other hand, a mass ratio (C/I) in the cathode catalyst layer is preferably less than 4.0, more preferably less than 3.5, and particularly preferably less than 3.0. In addition, the ratio is preferably 1.0 or less, more preferably 1.5 or less, and particularly preferably 1.7 or less.

The thickness of the catalyst layer is preferably 0.1 µm or more, more preferably 0.5 µm or more, and particularly preferably 1 µm or more, from the viewpoints of gas diffusivity and durability. In addition, the thickness is preferably 500 µm or less, more preferably 100 µm or less, and particularly preferably 30 µm or less.

The anode catalyst layer and the cathode catalyst layer may be constituted by the same material, or may be constituted by different materials. In a case where CCM is used for a water electrolysis device, a catalyst that generates oxygen with water or a hydroxide used as a raw material can be used for the catalyst particles in the anode catalyst layer. From such viewpoints, in the anode catalyst layer, a noble metal such as iridium, ruthenium, rhodium, or palladium, or an oxide thereof is preferably used.

These catalysts are preferably used as particles. In this case, the catalyst particles may be used as single particles or as catalyst-supporting particles that are supported on titanium oxide or the like.

For the catalyst particles of the cathode catalyst layer, a catalyst that generates hydrogen with protons or water used as a raw material can be used. From such viewpoints, in the cathode catalyst layer, platinum-supporting carbon particles in which platinum is supported on carbon particles are preferably used.

In a water electrolysis device, a "crossover" may occur in which hydrogen generated at the cathode permeates the electrolyte membrane and reaches the anode side. When crossover occurs, hydrogen will be mixed into the oxygen generated at the anode, increasing the risk of explosion. As one embodiment for avoiding such a risk, the anode catalyst layer preferably contains iridium element and at least one noble metal element selected from the group consisting of platinum, ruthenium, rhodium, palladium, gold, silver, and osmium. Hereinafter, "noble metals other than iridium" may be referred to as "other noble metals" in some cases. As the other noble metals, platinum and palladium are preferred, and platinum is particularly preferred.

The embodiment in which the anode catalyst layer contains iridium element and other noble metal elements is not particularly limited, and any known embodiment can be used. For example, examples include an embodiment (I) in which particles containing iridium element (hereinafter, referred to as "iridium-based particles") and particles containing other noble metal elements (hereinafter, referred to as "other noble metal-based particles") are contained, an embodiment (II) in which alloy particles of iridium and other noble metals are used, and an embodiment (III) in which iridium and other noble metals are laminated by sputtering or vapor deposition.

The iridium element is preferably contained in the anode catalyst layer in the form of iridium-based particles. The other noble metal element is preferably contained in the anode catalyst layer in the form of the other noble metal-based particles. From the viewpoint, among the above-mentioned embodiments, the embodiment (I) is more preferable. That is, the anode catalyst layer preferably contains particles containing iridium element and particles containing the other noble metal elements.

More specific examples of the embodiment (I) described above include an embodiment (I-1) in which iridium-based particles and other noble metal-based particles are each contained alone, an embodiment (I-2) in which catalyst-supporting particles are used in which iridium-based particles and other noble metal-based particles are supported together or separately on a carrier composed of a metal oxide such as titanium oxide or tin oxide, and an embodiment (I-3) in which so-called core-shell particles or composite particles are used in which a part or the whole of the surface of iridium-based particles is covered with other noble metal-based particles.

In a case of the embodiment (I-1) described above, examples include an embodiment in which the first layer has a single layer constitution in which iridium-based particles and other noble metal-based particles are mixed, and an embodiment in which the first layer has a multilayer constitution in which a layer containing iridium-based particles and a layer containing other noble metal-based particles are both included, with the former being preferred.

Examples of the iridium-based particles include iridium particles and iridium oxide particles.

From the viewpoint of stability under high electric potential, the iridium element is preferably contained in the anode catalyst layer in the form of iridium oxide. That is, the anode catalyst layer preferably contains iridium oxide.

As the other noble metal particles, platinum particles and palladium particles are preferred, and platinum particles are particularly preferred. As for particles containing other noble metal elements, particles, not supported on a carrier, which is usually known as "*** black", can be used. Examples include "platinum black" and "palladium black". Furthermore, as particles containing other noble metal elements, as described above, catalyst-supporting particles, in which particles containing other noble metal elements are supported on a carrier composed of metal oxides such as titanium oxide and tin oxide, can be used.

Carbon particles such as carbon black are generally known as carriers for the catalyst-supporting particles. However, since the anode in a water electrolysis device is in a high electric potential environment and there are concerns about the resistance of carbon particles to electrochemical oxidation, it is preferable not to use them in the anode catalyst layer.

The iridium-based particles and other noble metal-based particles can be synthesized or produced by known methods. Alternatively, commercially available products can be used. As for commercially available products, for example, iridium oxide particles such as "Elyst, IrO₂ catalyst, manufactured by Umicore" and "iridium oxide powder, manufactured by TOKURIKI HONTEN CO., LTD.", platinum black such as "HISPEC 1000, manufactured by Johnson Matthey", "TEC90300, TEC 90400, manufactured by TANAKA KIKINZOKU K.K.", "Pt black manufactured by BASF", "platinum black manufactured by TOKURIKI HONTEN CO., LTD.", and "platinum black manufactured by ISHIFUKU Metal Industry Co., Ltd.", palladium black such as "palladium black manufactured by Soekawa Rikagaku", "Pd-black manufactured by Alfa Aesar", and "Pd black manufactured by Wako Pure Chemical Industries, Ltd." and the like are available. Furthermore, these particles can be used after being pulverized to a desired particle size, for example, about 1 to 100 nm.

With regard to the mass of iridium element (Ir mass) and the mass of other noble metal elements (NM mass) in the anode catalyst layer, a larger Ir mass is preferable from the viewpoint of ensuring good water electrolysis capability, while a larger NM mass is preferable from the viewpoint of reducing the hydrogen concentration in oxygen gas. From the viewpoint of appropriately balancing these effects, the ratio of Ir mass to NM mass (Ir mass : NM mass) is preferably in the range of 51:49 to 99:1, more preferably in the range of 55:45 to 95:5, still more preferably in the range of 60:40 to 92:8, and particularly preferably in the range of 65:35 to 90:10.

Here, the content ratio of Ir mass and NM mass can be calculated by analyzing a cross-sectional image of the catalyst layer with an electron probe microanalyzer (EPMA) to measure the mass ratio of each element.

In the anode catalyst layer, the mass of iridium element per unit area is preferably in the range of 0.2 to 2.0 mg/cm², more preferably in the range of 0.4 to 1.5 mg/cm², and particularly preferably in the range of 0.6 to 1.3 mg/cm².

In the anode catalyst layer, it is preferable that the mass of other noble metal element per unit area be set appropriately within the above-described range of ratio (Ir mass : NM mass) based on the above mass of iridium element per unit area.

In an embodiment in which the anode catalyst layer contains iridium and other noble metals as catalysts, the layer (B) of the electrolyte membrane disposed on the anode catalyst layer side preferably contains a fluorine-based polymer electrolyte. Such a combination can significantly reduce the hydrogen gas concentration in the oxygen gas generated at the anode.

### [Method of Producing CCM]

The CCM according to an embodiment of the present invention is produced by laminating a catalyst layer on an electrolyte membrane. A laminating method of the catalyst layer is not particularly limited. For example, a coating method, a transferring method, and a combination of a coating method and a transferring method can be adopted. The coating method is a method in which a coating liquid for the catalyst layer is applied to the electrolyte membrane, and then dried for lamination. The transferring method is a method in which a catalyst layer transfer sheet including a catalyst layer laminated on a transfer base material and an electrolyte membrane are hot-pressed and laminated. Among them, the transferring method is preferred. As the transfer base material used for the catalyst layer transfer sheet, those similar to the above-mentioned resin film or substrate as described above can be used.

The method of producing CCM using the transferring method will be hereinafter described taking several producing methods as examples, but the present invention is not limited to these producing methods.

A CCM producing method (I) that can be adopted is a producing method including a step of obtaining an electrolyte membrane in which a layer (B) is laminated on a layer (A), a step of obtaining a catalyst layer transfer sheet in which a catalyst layer is laminated on a transfer base material, and a step of performing hot-pressing while the layer (B) of the electrolyte membrane is brought into face-to-face contact with the catalyst layer of the transfer sheet.

Another CCM producing method that can be adopted is a producing method which includes transferring a layer (B) together with a catalyst layer on a layer (A). Such a CCM producing method (II) that can be adopted is a producing method including a step of forming a layer (A), a step of obtaining a catalyst layer/layer (B) transfer sheet in which the catalyst layer and the layer (B) are laminated in this order on a transfer base material, and a step of performing hot-pressing while the layer (A) is brought into face-to-face contact with the layer (B) of the transfer sheet.

A catalyst layer/layer (B) transfer sheet used in the CCM producing method (II) described above is useful as a member for obtaining the CCM according to an embodiment of the present invention. That is, the member for obtaining the CCM according to an embodiment of the present invention is composed of a catalyst layer/layer (B) transfer sheet in which a catalyst layer and a layer (B) are laminated in this order on a transfer base material.

In the above-described CCM producing method (II), when the layer (B) is composed of two layer constitution including a layer (B-1) imparting a particle concentration (Y1) and a layer (B-2) imparting a particle concentration (Y2), a catalyst layer/layer (B-2)/layer (B-1) transfer sheet can be used as a catalyst layer/layer (B) transfer sheet, in which a catalyst layer, the layer (B-2), and the layer (B-1) are laminated in this order on a transfer base material. This transfer sheet is useful as a member for obtaining the CCM according to an embodiment of the present invention. That is, the member for obtaining the CCM according to an embodiment of the present invention is composed of a catalyst layer/layer (B-2)/layer (B-1) transfer sheet in which a catalyst layer, a layer (B-2), and a layer (B-1) are laminated in this order on a transfer base material.

As another CCM producing method (III) in a case where the layer (B) is composed of a two layer constitution, a producing method including a step of obtaining a laminate in which the layer (B-1) is laminated on the layer (A), a step of obtaining a catalyst layer/layer (B-2) transfer sheet in which a catalyst layer and the layer (B-2) are laminated in this order on a transfer base material, and a step of performing hot-pressing while the layer (B-1) of the laminate described above is brought into face-to-face contact with the layer (B-2) of the transfer sheet described above can be adopted.

A catalyst layer/layer (B-2) transfer sheet used in the CCM producing method (III) described above is useful as a member for obtaining the CCM according to an embodiment of the present invention. That is, the member for obtaining the CCM according to an embodiment of the present invention is composed of a catalyst layer/layer (B-2) transfer sheet in which a catalyst layer and a layer (B-2) are laminated in this order on a transfer base material.

The transfer sheet used for the CCM producing methods (II) and (III) described above, i.e., a member for obtaining the CCM, can be produced, for example, by applying the coating liquid for the catalyst layer to the transfer base material, and, without drying or after drying, applying the coating liquid for the layer (B), followed by drying. A method can also be used in which a transfer base material is coated with a coating liquid for the catalyst layer and a coating liquid for the layer (B) simultaneously using a multilayer die or a multilayer slide coater. The coating method is not particularly limited as long as it is a method capable of coating the desired shape. For example, die-coating, screen coating, spray coating, gravure coating, and slide coating can be used.

In the CCM producing method described above, the temperature and pressure of the hot-pressing may be appropriately selected depending on the thickness and moisture content of the layer (A), the thickness of the layer (B) and the catalyst layer, and the type of the transfer base material. From the viewpoints of industrial productivity, suppression of thermal decomposition of the polymer electrolyte, and the like, the hot-pressing is preferably performed in the range of 120°C to 250°C. Specifically, it is more preferable to perform the hot-pressing at a temperature higher than the glass transition temperature of the polymer contained in the layer (B) and 200°C or less. The pressure in the hot-pressing is preferably as weak as possible from the viewpoint of protecting the electrolyte membrane. For example, the pressure is preferably in the range of 2 to 10 MPa for the plate press.

### [Membrane Electrode Assembly]

The membrane electrode assembly contains the above-described CCM and gas diffusion layers (gas diffusion electrodes) disposed on both faces of the CCM. Specifically, an anode gas diffusion layer and a cathode gas diffusion layer are disposed and joined on the anode catalyst layer side and on the cathode catalyst layer side, respectively, of the CCM.

The gas diffusion layer is commonly constituted by a member having gas permeability and electron conductivity, for example, a carbon porous material or a metal porous material. Examples of the carbon porous material include carbon paper, carbon cloth, carbon mesh, carbon nonwoven fabric, and the like. Examples of the metal porous material include a metal mesh, foam metal, metal fabric, sintered metal material, metal nonwoven fabric, and the like. Examples of this metal include titanium, aluminum, copper, nickel, a nickel-chromium alloy, copper and an alloy thereof, silver, an aluminum alloy, a zinc alloy, a lead alloy, titanium, niobium, tantalum, iron, stainless steel, gold, platinum, and the like.

The gas diffusion layer can undergo the following: a water-repellent treatment to prevent a decrease caused in the diffusion and permeability of gas by any retention of water; a partial water-repellent treatment and a partial hydrophilization to form an emitting passage of water; the addition of carbon powder to decrease resistance; or the like. In addition, an electroconductive interlayer containing at least an inorganic electroconductive substance and a hydrophobic polymer can be provided on the CCM side of the gas diffusion layer. In particular, in a case where the gas diffusion layer is constituted by carbon fiber fabric or nonwoven fabric that has a large porosity, providing an electroconductive interlayer can inhibit the performance of the gas diffusion layer from being decreased by the infiltration of a catalyst solution into the gas diffusion layer.

The thickness of the gas diffusion layer is preferably 50 µm or more, more preferably 100 µm or more, and particularly preferably 150 µm or more. In addition, the thickness is preferably 1,000 µm or less, more preferably 700 µm or less, and particularly preferably 500 µm or less.

The anode gas diffusion layer and the cathode gas diffusion layer may be constituted by the same material, or may be constituted by different materials. In a case where a membrane electrode assembly is used for a water electrolysis hydrogen generator, the anode gas diffusion layer and the cathode gas diffusion layer are preferably constituted by different materials. For example, it is preferable that the anode gas diffusion layer is constituted by a metal porous material, and that the cathode gas diffusion layer is constituted by a carbon porous material.

### [Application Examples]

The electrolyte membrane according to the embodiment of the present invention, and the CCM and membrane electrode assembly using the electrolyte membrane can be used in electrochemical applications, for example. Examples of the electrochemical uses include fuel cells, redox-flow batteries, water electrolysis devices, electrochemical hydrogen compressors, and the like. Among these, they are preferably applied to water electrolysis devices, and particularly preferably applied to water electrolysis hydrogen generators.

### Examples

Hereinafter, the present invention will be more specifically described with reference to Examples, but the present invention is not limited to these Examples. In this regard, the measurement conditions are as below-mentioned.

### (1) Molecular Weight of Polymer

The number-average molecular weight and weight-average molecular weight of a polymer solution were measured by gel permeation chromatography (GPC). As a device, an HLC-8022GPC manufactured by Tosoh Corporation was used. For a detector, an ultraviolet detector and a differential refractometer, were used. In addition, as GPC columns, two TSK gel SuperHM-H columns (having an inner diameter of 6.0 mm and a length of 15 cm) manufactured by Tosoh Corporation were used. Measurements were made using as a developing solvent, an N-methyl-2-pyrrolidone solvent (an N-methyl-2-pyrrolidone solvent containing 10 mmol/L lithium bromide) at a flow rate of 0.2 mL/min, and the number-average molecular weight and weight-average molecular weight were determined in terms of standard polystyrene.

### (2) Ion Exchange Capacity (IEC) of Polymer

A PET film was coated with a solution of the polymer dissolved in NMP, and dried to produce an electrolyte membrane. This electrolyte membrane was measured for an ion exchange capacity by a neutralization titration method. The measurement was performed three times, and the average of the three measurements was adopted.

An electrolyte membrane was subjected to proton exchange, and thoroughly washed with pure water, and water on the membrane surface was wiped off. Then, the electrolyte membrane was vacuum-dried at 100°C for 12 hours or more, and the dry weight of the membrane was obtained.

To the electrolyte membrane, 50 mL of an aqueous 5 mass% sodium sulfate solution was added, and the electrolyte membrane was left to stand for 12 hours for ion exchange.

An aqueous sodium sulfate solution after ion exchange was titrated using an aqueous 0.01 mol/L sodium hydroxide solution. A commercially available 0.1 w/v% phenolphthalein solution for titration was added as an indicator, and the point at which the solution turned pale red-purple was taken as the end point.

The ion exchange capacity (IEC) was determined in accordance with the following formula. IEC (meq/g) = [concentration (mmol/mL) of aqueous sodium hydroxide solution × dropping amount (mL) of aqueous sodium hydroxide solution] / dry weight (g) of sample.

### (3) Evaluation of Particle Concentrations (Y1) and (Y2) in Layer (B)

A sample was prepared by cutting out a cross-section of an electrolyte membrane using cryo-ultramicrotomy. For this sample, a scanning transmission electron microscope (STEM) was used to obtain an image at a magnification at which the thickness of the layer (B) was identifiable, and the thickness of the layer (B) was measured. From the thickness of the layer (B) thus obtained, regions (interface regions) of 10% thickness from both interfaces of the layer (B) were determined, and the presence or absence of particles in both interface regions was confirmed. When the presence of particles in both interface regions was confirmed as a result of the above observation, elemental analysis of both interface regions was performed using a scanning transmission electron microscope-energy dispersive X-ray analyzer (STEM-EDX). Taking Example 1 as an example, the layer (B) contains particles (carbon black) and a polymer (fluorine-based polymer electrolyte). The particle concentration (Y1) was determined by calculating the mass ratio of the particles to the polymer from the ratio "C/F" of the element "C" to the element "F" obtained by elemental analysis in the interface region on the layer (A) side, the structural formula of the particles, and the structural formula of the polymer. In the same manner, the particle concentration (Y2) was determined from the ratio "C/F" in the interface region on the opposite side to the layer (A).

### <Observation of Cross-section with Scanning Transmission Electron Microscope (STEM)>

Device: a field-emission electron scanning transmission electron microscope JEM-2100F (manufactured by JEOL Ltd.)
Accelerating voltage: 200 kV
Magnification: 50,000 to 150,000 times

### <Elemental Analysis with Scanning Transmission Electron Microscope - Energy Dispersive X-ray Analyzer (STEM-EDX)>

Device: a field-emission electron scanning transmission electron microscope JEM-2100F (manufactured by JEOL Ltd.)
EDX detector: JED-2300T (manufactured by JEOL Ltd.)
EDX detection system: Analysis Station
Accelerating voltage: 200 kV
Beam diameter: 1 nmΦ
Measurement time: 30 seconds
Measured element: C and F, or Ce and F.

### (4) Measurement of Thickness of Each Layer by SEM Observation

The cross-sections of the CCM were observed with a scanning electron microscope (SEM) under the conditions described below, and the thickness of each layer was measured from the obtained images.
Device: Cold cathode field-emission scanning electron microscope (FE-SEM) SU-8020 (manufactured by Hitachi High-Tech Corporation)
·Accelerating voltage: 5.0 kV
·Detected signal: Backscattered electron
·Pretreatment: A cross-sectional sample prepared by the BIB method was coated with Pt and then measured.

The BIB method is a method using a cross-sectional specimen preparation device that uses an argon ion beam. A shielding plate is placed directly above the specimen, and a broad argon ion beam is then irradiated from above to perform etching, thereby creating an observation surface/analysis surface (cross-section).

### (5) Evaluation of Interlaminar Joining Property (Peelability)

A CCM in which a catalyst layer is laminated on an electrolyte membrane produced in each of Examples and Comparative Examples was cut to a size of 2 cm × 2 cm, and used as a test piece. The test piece was immersed in 20 g of ion-exchanged water at 80°C for 6 hours, 12 hours, 18 hours, and 24 hours, and the joining state between the electrolyte membrane and the catalyst layer was observed and evaluated according to the following criteria.
A: No delamination occurred even after immersion for 24 hours.
B: No delamination occurred after immersion for 18 hours, but delamination occurred after immersion for 24 hours.
C: No delamination occurred after immersion for 12 hours, but delamination occurred after immersion for 18 hours.
D: No delamination occurred after immersion for 6 hours, but delamination occurred after immersion for 12 hours.
E: Delamination occurred after immersion for 6 hours.

### (6) Evaluation of Durability

A commercially available gas diffusion electrode 24BCH manufactured by SGL Carbon AG as a cathode gas diffusion layer was laminated on a cathode catalyst layer side and a commercially available porous titanium sintered plate as an anode gas diffusion layer was laminated on an anode catalyst layer side of a CCM in which a catalyst layer is laminated on each of both faces of an electrolyte membrane produced in each of Examples and Comparative Examples to produce a membrane electrode assembly.

The membrane electrode assembly produced as above-described was set in a JARI standard cell "Ex-1" (with an electrode having an area of 25 cm²) manufactured by Eiwa Corporation, the cell was fastened so that the average CCM pressure was 4 MPa, and the cell temperature was set at 80°C. To both of the cathode electrode and the anode electrode, de-ionized water having an electroconductivity of 1 µS/cm or less was supplied at a flow rate of 0.2 L/min at an atmospheric pressure, and an electric current of 2.0 A/cm² was applied to produce hydrogen gas and oxygen gas through a water-electrolytic reaction.

The durability was evaluated by the rate of increase in voltage (V₁) from the initially applied voltage (V₀) when an electrical current of 2.0A/cm² was continuously applied for 300 hours. The smaller the rate of increase in voltage, the better the durability. The rate of increase in voltage is calculated using the following formula: Rate of increase in voltage (%) = (V₁ - V₀) × 100/( V₀)

In the durability test described above, a decrease in the joining property between the electrolyte membrane and the catalyst layer during operation causes an increase in the applied voltage.

### (7) Measurement of Concentration of Hydrogen Gas in Oxygen Gas

Every 25 hours from the start of operation, oxygen gas generated and emitted from the anode was sampled, and water was removed from the oxygen gas in the above-described evaluation of durability, and then the oxygen gas was introduced in a gas chromatographic device to measure the concentration (ppm, a volume ratio) of hydrogen gas in the oxygen gas in accordance with the following conditions, and averaged.
Device: 490 Micro GC, manufactured by Agilent Technologies, Inc.
Column: Part No. 493001360, Type BF CHA 10m MS5A Unl, Facl, manufactured by Agilent Technologies, Inc.
Carrier gas: Ar
Column temperature: 100°C

### [Synthesis Example 1]

### (Synthesis of 2,2-bis(4-hydroxyphenyl)-1,3-dioxolane (K-DHBP) represented by the following chemical formula (G1))

In a 500 mL flask equipped with a stirrer, a thermometer, and a distillation tube, 49.5 g of 4,4'-dihydroxybenzophenone, 134 g of ethylene glycol, 96.9 g of trimethyl orthoformate, and 0.50 g of p-toluenesulfonic acid monohydrate were fed and dissolved. Then, the resulting solution was stirred for 2 hours at a temperature kept at 78 to 82°C. Further, the internal temperature was gradually raised to 120°C, and the solution was heated until the distillation of methyl formate, methanol, and trimethyl orthoformate completely stopped. After the reaction liquid was cooled to room temperature, the reaction liquid was diluted with ethyl acetate, the organic layer was washed with 100 mL of an aqueous 5% potassium carbonate solution, the resulting liquid was separated, and the solvent was distilled off. To the residue, 80 mL of dichloromethane was added to deposit crystals, and the crystals were filtrated and dried to give 52.0 g of 2,2-bis(4-hydroxyphenyl)-1,3-dioxolane represented by the following chemical formula (G1). This crystal was analyzed by gas chromatography (GC), and found to contain 99.9% 2,2-bis(4-hydroxyphenyl)-1,3-dioxolane and 0.1% 4,4'-dihydroxybenzophenone. The compound had a purity of 99.9%.

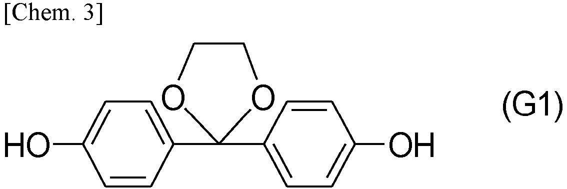

### [Synthesis Example 2]

### (Synthesis of disodium-3,3'-disulfonate-4,4'-difluorobenzophenone represented by the following chemical formula (G2))

In 150 mL of fuming sulfuric acid (50% SO₃) (a reagent from Fujifilm Wako Pure Chemical Corporation), 109.1 g of 4,4'-difluorobenzophenone (a reagent from Sigma-Aldrich Japan) was allowed to react at 100°C for 10 hours. Then, the resulting product was gradually poured into a large amount of water, the resulting mixture was neutralized with NaOH, and then 200 g of sodium chloride (NaCl) was added to the mixture to precipitate a synthesized product. The precipitate obtained was filtrated off and recrystallized from an aqueous ethanol solution to give disodium-3,3'-disulfonate-4,4'-difluorobenzophenone represented by the following chemical formula (G2). The compound had a purity of 99.3%.

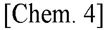

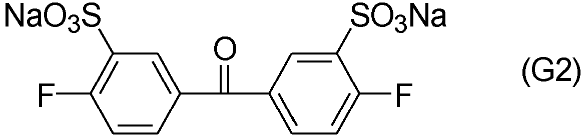

### [Synthesis Example 3]

### (Synthesis of nonionic oligomer a1 represented by the following general formula (G3))

Into a 2,000 mL stainless-steel polymerizer equipped with a stirrer, a nitrogen introduction tube, and a Dean-Stark trap, 16.59 g of potassium carbonate (an Aldrich reagent, 120 mmol), 25.83 g (100 mmol) of K-DHBP obtained in Synthesis Example 1, and 20.3 g of 4,4'-difluorobenzophenone (an Aldrich reagent, 93 mmol) were introduced. After the device was purged with nitrogen, 300 mL of N-methylpyrrolidone (NMP) and 100 mL of toluene were added, the resulting mixture was dehydrated at 150°C, the temperature was raised to remove toluene, and the mixture was polymerized at 170°C for 3 hours. The resulting product was purified by reprecipitation in a large amount of methanol to obtain a nonionic oligomer a1 having a hydroxy end. The number-average molecular weight of this nonionic oligomer a1 having a hydroxy end was 10,000. Into a 500 mL three-necked flask equipped with a stirrer, a nitrogen introduction tube, and a Dean-Stark trap, 1.1 g of potassium carbonate (a reagent from Sigma-Aldrich Japan, 8 mmol) and 20.0 g (2 mmol) of the nonionic oligomer a1 having a hydroxy end were introduced. After the device was purged with nitrogen, 100 mL of NMP and 30 mL of toluene were added, the resulting mixture was dehydrated at 100°C, and the temperature was raised to remove toluene. Furthermore, 2.2 g of hexafluorobenzene (a reagent from Sigma-Aldrich Japan, 12 mmol) was added, and the resulting mixture was allowed to react at 105°C for 12 hours. The resulting product was purified by reprecipitation in a large amount of isopropyl alcohol to obtain a nonionic oligomer a1 (having a fluoro end group) represented by the following general formula (G3). The number-average molecular weight was 11,000.

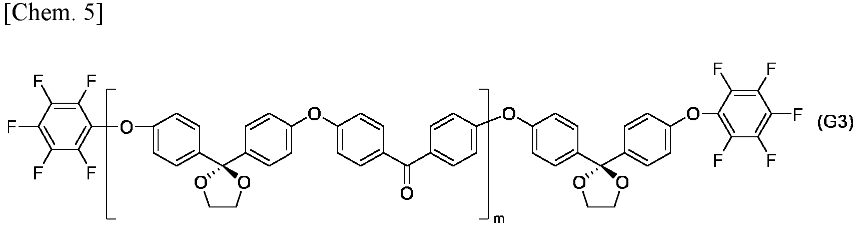

### [Synthesis Example 4]

### (Synthesis of ionic oligomer a2 represented by the following general formula (G4))

Into a 2,000 mL stainless-steel polymerizer equipped with a stirrer, a nitrogen introduction tube, and a Dean-Stark trap, 27.6 g of potassium carbonate (a reagent from Sigma-Aldrich Japan, 200 mmol), 12.9 g (50 mmol) of K-DHBP obtained in Synthesis Example 1, 9.3 g of 4,4'-biphenol (a reagent from Sigma-Aldrich Japan, 50 mmol), 39.3 g (93 mmol) of disodium-3,3'-disulfonate-4,4'-difluorobenzophenone obtained in Synthesis Example 2, and 17.9 g of 18-crown-6 (from Fujifilm Wako Pure Chemical Corporation, 82 mmol) were introduced. After the device was purged with nitrogen, 300 mL of NMP and 100 mL of toluene were added, the resulting mixture was dehydrated at 150°C, the temperature was raised to remove toluene, and the mixture was polymerized at 170°C for 6 hours. The resulting product was purified by reprecipitation in a large amount of isopropyl alcohol to obtain an ionic oligomer a2 (having a hydroxy end group) represented by the following general formula (G4). The number-average molecular weight was 16,000. In the general formula (G4), M represents H, Na, or K.

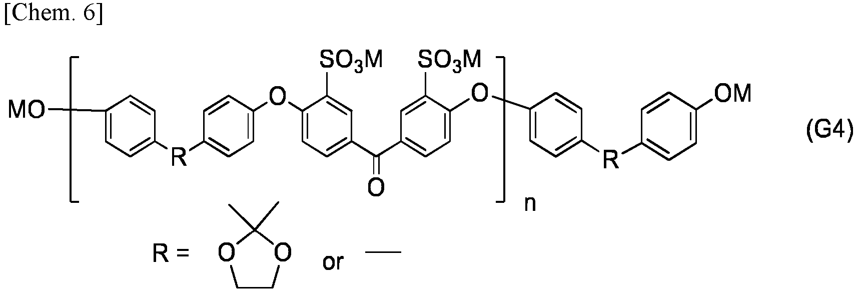

### [Synthesis Example 5]

### (Synthesis of neopentyl 3-(2,5-dichlorobenzoyl)benzenesulfonate represented by the following chemical formula (G5))

Into a 3 L three-necked flask equipped with a stirrer and a cooling tube, 245 g (2.1 mol) of chlorosulfonic acid was introduced, subsequently 105 g (420 mmol) of 2,5-dichlorobenzophenone was added, and the resulting mixture was allowed to react in an oil bath at 100°C for 8 hours. After a predetermined period of time, the reaction liquid was poured onto 1,000 g of crushed ice slowly, and extracted with ethyl acetate. The organic layer was washed with a saline solution, and dried over magnesium sulfate. Then, ethyl acetate was distilled off to obtain a pale yellow crude crystal of 3-(2,5-dichlorobenzoyl)benzenesulfonic chloride. The crude crystal was directly used without being purified in the next step.

To 300 mL of pyridine, 41.1 g (462 mmol) of 2,2-dimethyl-1-propanol (neopentyl alcohol) was added, and the resulting mixture was cooled to approximately 10°C. The crude crystal obtained as above-described was gradually added over a period of approximately 30 minutes. After all the amount of the crude crystal was added, the resulting mixture was stirred for another 30 minutes to react. After the reaction, the reaction liquid was poured into 1,000 mL of hydrochloric acid water to collect a solid precipitated. The solid obtained was dissolved in ethyl acetate, and the resulting solution was washed with an aqueous sodium hydrogen carbonate solution and a saline solution, and then dried over magnesium sulfate. Then, ethyl acetate was distilled off to obtain a crude crystal. This was recrystallized with methanol to obtain a white crystal of neopentyl 3-(2,5-dichlorobenzoyl)benzenesulfonate represented by the following chemical formula (G5).

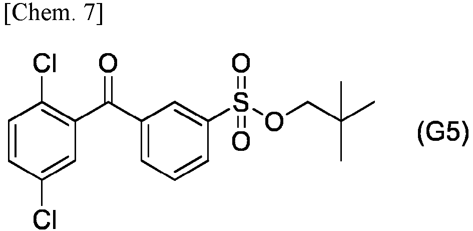

### [Synthesis Example 6]

### (Synthesis of oligomer having no ionic group and represented by the following general formula (G6))

Into a 1 L three-necked flask equipped with a stirrer, a thermometer, a cooling tube, a Dean-Stark tube, and a nitrogen introduction three-way cock, 49.4 g (0.29 mol) of 2,6-dichlorobenzonitrile, 88.4 g (0.26 mol) of 2,2-bis(4-hydroxyphenyl)-1,1,1,3,3,3-hexafluoropropane, and 47.3 g (0.34 mol) of potassium carbonate were weighed out. After the flask was purged with nitrogen, 346 mL of sulfolane and 173 mL of toluene were added, and the resulting mixture was stirred. The flask was immersed in an oil bath, and the mixture was heated under reflux at 150°C. The resulting solution was allowed to react, during which water generated by the reaction was allowed to undergo azeotropy with toluene, and thus removed out of the system through the Dean-Stark tube. In approximately 3 hours, almost no generation of water was observed. The reaction temperature was gradually raised to remove the majority of the toluene, and then, the reaction was continued at 200°C for 3 hours. Next, 12.3 g (0.072 mol) of 2,6-dichlorobenzonitrile was added, and the resulting mixture was further allowed to react for 5 hours.

The reaction liquid obtained was left to cool, and then diluted with the addition of 100 mL of toluene. The precipitate of the inorganic compound by-produced was removed by filtration, and the filtrate was introduced into 2 l of methanol. The product precipitated was filtrated, collected, dried, and then dissolved in 250 mL of tetrahydrofuran. This was reprecipitated in 2 L of methanol to obtain 107 g of an oligomer of interest represented by the following general formula (G6). The number-average molecular weight was 11,000.

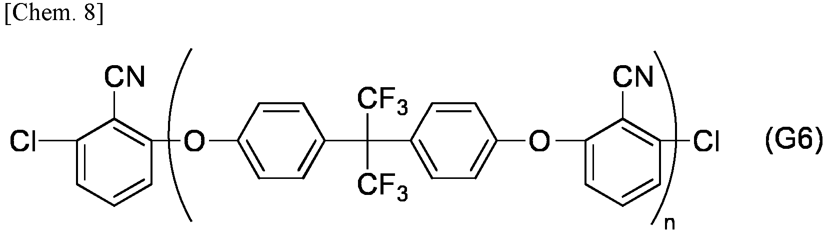

### [Synthesis Example 7]

### (Synthesis of polyether sulfone (PES)-based block copolymer precursor b1 composed of segment represented by the following chemical formula (G8) and segment represented by the following general formula (G9))

Anhydrous nickel chloride in an amount of 1.62 g and dimethyl sulfoxide in an amount of 15 mL were mixed, and adjusted to 70°C. To this, 2.15 g of 2,2'-bipyridyl was added, and the resulting mixture was stirred at the same temperature for 10 minutes to prepare a nickel-containing solution.

Here, 1.49 g of (2,2-dimethylpropyl) 2,5-dichlorobenzenesulfonate and 0.50 g of SUMIKAEXCEL PES5200P (manufactured by Sumitomo Chemical Co., Ltd., Mn = 40,000, Mw = 94,000) represented by the following general formula (G7) were dissolved in 5 mL of dimethyl sulfoxide, and to the resulting solution, 1.23 g of zinc powder was added, and adjusted to 70°C. Into this, the nickel-containing solution was poured, and the resulting mixture was allowed to undergo a polymerization reaction at 70°C for 4 hours. The reaction mixture was added to 60 mL of methanol, then 60 mL of 6 mol/L hydrochloric acid was added, and the resulting mixture was stirred for 1 hour. The solid precipitated was separated by filtration, and dried to obtain 1.62 g of a light gray block copolymer precursor b1 containing segments represented by the following general formula (G8) and the following general formula (G9) respectively with a yield of 99%. The weight-average molecular weight was 230,000.

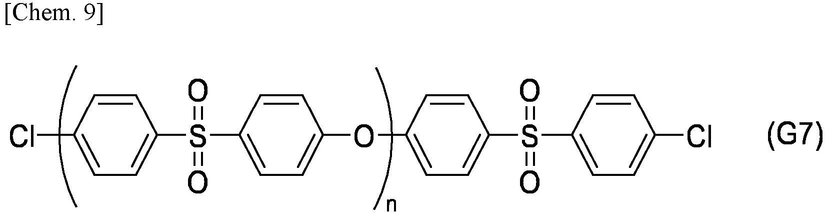

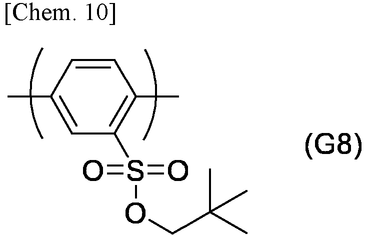

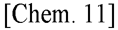

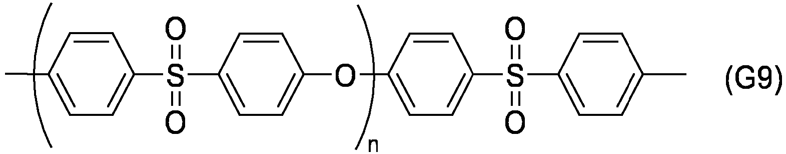

### [Preparation of Coating Liquid for Layer (A)]

Coating liquids p1 to p4 containing distinct polymer electrolytes were prepared according to the following procedure.

### [Coating Liquid p1]: Coating liquid containing polyether ketone-based block copolymer P1

In a 2,000 mL stainless-steel polymerizer equipped with a stirrer, a nitrogen introduction tube, and a Dean-Stark trap, 16 g of the ionic oligomer a2 and 11 g of the nonionic oligomer a1 were introduced, NMP was added in such a manner that the total amount of the oligomers fed was 7 wt%, and the resulting mixture was allowed to react at 105°C for 24 hours.

The resulting product was reprecipitated in a large amount of an isopropyl alcohol/NMP solution mixture (at a weight ratio of 2/1), and the precipitate obtained was collected by filtration, and washed with a large amount of isopropyl alcohol to obtain a block copolymer P1. The weight-average molecular weight was 340,000. The ion exchange capacity (IEC) of this block copolymer P1 was 2.1 meq/g. Subsequently, the block copolymer P1 was dissolved in NMP, and filtrated under pressure using a 1 µm polypropylene-made filter to obtain a coating liquid p1 (having a polymer electrolyte at a concentration of 13 mass%). The viscosity of the coating liquid p1 was 1,300 mPa·s.

### [Coating Liquid p2]: Coating liquid containing polyether ketone-based random copolymer P2

Into a 5 L reaction container equipped with a stirrer, a nitrogen introduction tube, and a Dean-Stark trap, 129 g of 2,2-bis(4-hydroxyphenyl)-1,3-dioxolane synthesized in Synthesis Example 1, 93 g of 4,4'-biphenol (a reagent from Sigma-Aldrich Japan), and 422 g (1.0 mol) of disodium-3,3'-disulfonate-4,4'-difluorobenzophenone synthesized in Synthesis Example 2 were introduced. After the device was purged with nitrogen, 3,000 g of NMP, 450 g of toluene, and 232 g of 18-crown-6 (a reagent from Fujifilm Wako Pure Chemical Corporation) were added. The dissolution of all the monomers was verified, and then 304 g of potassium carbonate (a reagent from Sigma-Aldrich Japan) was added. The resulting mixture was dehydrated at 160°C under reflux. Then, the mixture was heated to remove toluene, and underwent desalting polycondensation at 200°C for 1 hour. The resulting random copolymer P2 had a weight-average molecular weight of 320,000 and an ion exchange capacity (IEC) of 2.1.

Next, NMP was added to dilute a polymer stock solution in such a manner that the viscosity of the solution became 500 mPa·s. An angle rotor RA-800 was set in an inverter-compact high-speed cooling centrifuge (model number 6930) manufactured by Kubota Corporation, and the polymer stock solution was directly centrifuged at 25°C at a centrifugal force of 20,000 G for 30 minutes. The solid (cake) precipitated and the supernatant liquid (coating liquid) were clearly separated, and the supernatant liquid was collected. Next, the supernatant liquid was distilled under reduced pressure at 80°C with stirring, and NMP was removed until the polymer concentration became 14 mass%. The liquid was further filtrated under pressure through a 5 µm polyethylene-made filter to obtain a coating liquid p2. The viscosity of this coating liquid p2 was 1,000 mPa·s.

### [Coating Liquid p3] Polyarylene-based block copolymer P3 represented by the following general formula (G10)

Under nitrogen, 540 mL of dried N,N-dimethylacetoamide (DMAc) was added to a mixture of 135.0 g (0.336 mol) of neopentyl 3-(2,5-dichlorobenzoyl)benzenesulfonate, 40.7 g (5.6 mmol) of the nonionic oligomer synthesized in Synthesis Example 6 and represented by the general formula (G6), 6.71 g (16.8 mmol) of 2,5-dichloro-4'-(1-imidazolyl)benzophenone, 6.71 g (10.3 mmol) of bis(triphenylphosphine)nickel dichloride, 35.9 g (0.137 mol) of triphenylphosphine, 1.54 g of (10.3 mmol) of sodium iodide, and 53.7 g (0.821 mol) of zinc.

The reaction system was heated under stirring (finally heated to 79°C), and allowed to react for 3 hours. An increase in the viscosity in the system was observed during the reaction. The polymerization reaction solution was diluted with 730 mL of DMAc, stirred for 30 minutes, and filtrated using Celite as a filter aid.

The filtrate was concentrated with an evaporator, 43.8 g (0.505 mol) of lithium bromide was added to the filtrate, and the resulting mixture was allowed to react at an internal temperature of 110°C under a nitrogen atmosphere for 7 hours. After the reaction, the mixture was cooled to room temperature, poured into 4 L of acetone, and solidified. The product solidified was collected by filtration, air-dried, pulverized with a mixer, and washed with 1,500 mL of 1 N hydrochloric acid with stirring. After filtration, the product was washed with ion-exchanged water until the washing liquid came to have a pH of 5 or more. The product was dried at 80°C overnight to obtain 23.0 g of a polyarylene-based block copolymer P3. The polyarylene-based block copolymer P3 had a weight-average molecular weight of 190,000 and an ion exchange capacity (IEC) of 2.0. The resulting polyarylene-based block copolymer P3 was dissolved at 0.1 g/g in an organic solvent mixture of N-methyl-2-pyrrolidone/methanol at 30/70 (mass%) to obtain a coating liquid p3. The viscosity of the polymer electrolyte solution p3 was 1,200 mPa·s.

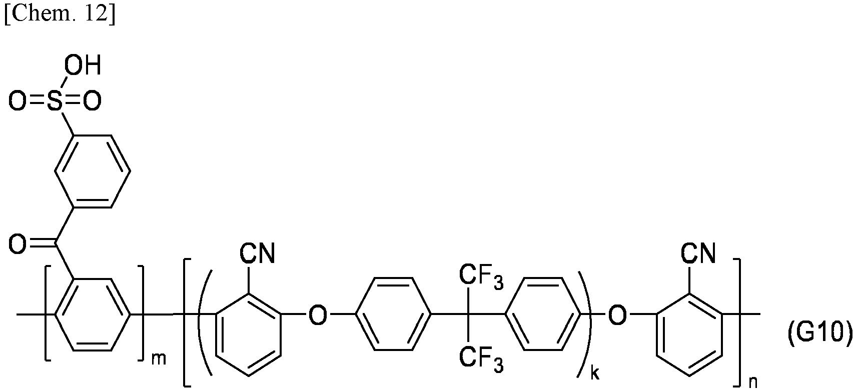

### [Coating Liquid p4] Polymer electrolyte solution containing polyether sulfone-based block copolymer P4

The block copolymer precursor b1 obtained in Synthesis Example 7 was weighed at 0.23 g, and added to a solution mixture of 0.16 g of lithium bromide monohydrate and 8 mL of NMP, and the resulting mixture was allowed to react at 120°C for 24 hours. The reaction mixture was poured into 80 mL of 6 mol/L hydrochloric acid, and the resulting mixture was stirred for 1 hour. The solid precipitated was separated by filtration. The solid separated was dried to obtain a light gray block copolymer P4 composed of a segment represented by the general formula (G9) and a segment represented by the following chemical formula (G11). The resulting polyether sulfone-based block copolymer P4 had a weight-average molecular weight of 190,000 and an ion exchange capacity (IEC) of 2.0. The resulting polyether sulfone-based block copolymer P4 was dissolved at 0.1 g/g in an organic solvent of N-methyl-2-pyrrolidone/methanol at 30/70 (mass%) to obtain a coating liquid p4. The viscosity of the coating liquid p4 was 1,300 mPa·s.

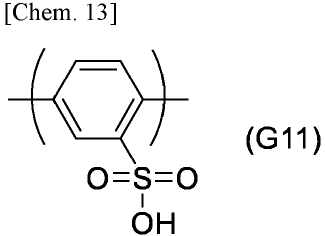

### [Preparation of Coating Liquid for Layer (B)]

Coating liquids b1 to b12 were prepared according to the following procedure.

### [Coating liquid b1]

Particle: Carbon black ("VULCAN" (registered trademark) XC72, manufactured by Cabot Corporation: average particle size, 30 nm) 10 parts by mass
·Polymer: ["Nafion" (registered trademark) product number, D2020], fluorine-based polymer electrolyte manufactured by Chemours Company 8 parts by mass, in terms of solids
·Solvent : Mixed solvent of water and 1-propyl alcohol at a mass ratio of 4:6

The particles and polymer described above were dispersed in a solvent using a bead mill to prepare a coating liquid b1 with a solid concentration of 10 mass%. The particle concentration in the coating liquid b1 is 56 mass%.

### [Coating Liquids b2 to b12]

Coating liquids b2 to b9 were prepared in the same manner as coating liquid b1, except that the particle concentration was changed as shown in Table 1. The coating liquid b10 was prepared in the same manner as the coating liquid b1, except that the particles were not used. The coating liquid b11 was prepared in the same manner as the coating liquid b1, except that the particle was changed from carbon black to cerium (IV) oxide manufactured by Fujifilm Wako Pure Chemical Corporation (average particle size, 50 nm). The coating liquid b12 was prepared in the same manner as the coating liquid b9, except that the polymer was changed to PVDF (polyvinylidene fluoride) manufactured by Solvey.

**[Table 1]**

| Coating liquid | Particle | Polymer | Particle concentration (mass%) |
|---|---|---|---|
| b1 | Carbon black | "nafion" | 56 |
| b2 | Carbon black | "nafion" | 71 |
| b3 | Carbon black | "nafion" | 45 |
| b4 | Carbon black | "nafion" | 38 |
| b5 | Carbon black | "nafion" | 36 |
| b6 | Carbon black | "nafion" | 33 |
| b7 | Carbon black | "nafion" | 25 |
| b8 | Carbon black | "nafion" | 10 |
| b9 | Carbon black | "nafion" | 5 |
| b10 | - | "nafion" | 0 |
| b11 | Cerium oxide | "nafion" | 56 |
| b12 | - | PVDF | 0 |

### [Production of Anode Catalyst Layer Transfer Sheet 1]

The following coating liquid for an anode catalyst layer was applied to a commercially available polytetrafluoroethylene-made film by cast coating in such a manner that the amount of iridium became 1.0 mg/cm². The coating liquid was dried at 100°C for 4 hours to produce an anode catalyst layer transfer sheet 1.

### <Coating Liquid for Anode Catalyst Layer>

The coating liquid has a solids concentration of 30 mass%, and contains 10 parts by mass of particles (Elyst Ir75 0480 (Ir content, 75%), IrO2 catalyst manufactured by Umicore), 1.2 parts by mass, in terms of solids, of a fluorine-based polymer electrolyte ( "Nafion" (registered trademark) product number, D2020, manufactured by The Chemours Company), and a solvent (a mixed solvent of water and 1-propyl alcohol at a mass ratio of 4:6).

### [Production of Cathode Catalyst Layer Transfer Sheet 1]

The coating liquid for a cathode catalyst layer was applied to a commercially available polytetrafluoroethylene-made film by cast coating in such a manner that the amount of platinum became 0.3 mg/cm². The liquid was dried at 100°C for 4 hours to produce a cathode catalyst layer transfer sheet 1.

### <Coating Liquid for Cathode Catalyst Layer>

The coating liquid has a solids concentration of 10 mass%, and contains 10 parts by mass of platinum catalyst-supporting carbon particles TEC10E50E (with platinum supported at a ratio of 50 mass%) manufactured by Tanaka Kikinzoku Kogyo K.K., 5 parts by mass, in terms of solids, of fluorine-based polymer electrolyte ["Nafion" (registered trademark) product number, D2020] manufactured by The Chemours Company, and a solvent (a mixed solvent of water and 1-propyl alcohol at a mass ratio of 1:1).

### [Example 1]

The electrolyte membrane was prepared according to the following procedure.

### [Preparation of Layer (A)]

Using "KAPTON" (registered trademark) tape, a PET film "LUMIRROR" (registered trademark) 125T60 manufactured by Toray Industries, Inc. was bonded and fixed to a stainless steel plate. The coating liquid p1 was applied to a PET film by cast coating, and then dried at 100°C for 4 hours to obtain a film-like membrane. This film-like membrane was immersed in an aqueous 10 mass% sulfuric acid solution at 80°C for 24 hours to undergo proton exchange and deprotection reaction, and then immersed in a large excess amount of pure water for 24 hours to be thoroughly washed, to obtain a layer (A) (having a thickness of 100 µm).

### [Lamination of Layer (B)]

The coating liquid b1 was applied to the layer (A) by cast coating, and dried at 100°C for 4 hours to laminate a layer (B-1) (having a thickness of 3 µm) on the layer (A). Subsequently, the coating liquid b10 was applied to the layer (B-1) by cast coating, and dried at 100°C for 4 hours to laminate a layer (B-2) (having a thickness of 3 µm).

### [Examples 2 to 13]

An electrolyte membrane was produced in the same manner as in Example 1 except that the coating liquid for the layer (B-1) and the coating liquid for the layer (B-2) were changed as shown in Table 2.

### [Examples 14 to 16]

An electrolyte membrane was prepared in the same manner as in Example 1 except that the coating liquid for the layer (A) p1 was changed as shown in Table 2.

### [Comparative Example 1]

An electrolyte membrane was obtained in the same manner as in Example 1 except that the layer (B) was not laminated.

### [Comparative Example 2]

A layer (A) was produced in the same manner as in Example 1, a coating liquid b10 was applied on the layer (A) by cast coating, and dried at 100°C for 4 hours to laminate a single layer (B) (having a thickness of 6 µm) composed of polymer alone on the layer (A), thereby producing an electrolyte membrane. In Table 2, the composition of the above single layer (B)is entered in the layer (B-1) column.

### [Comparative Example 3]

A layer (A) was produced in the same manner as in Example 1, a coating liquid b7 was applied on the layer (A) by cast coating, and dried at 100°C for 4 hours to laminate a single layer (B) (having a thickness of 6 µm) including particles and a polymer on the layer (A), thereby producing an electrolyte membrane. In Table 2, the composition of the above single layer (B) is entered in the layer (B-1) column.

### [Example 17]

A CCM was produced according to the following procedure.

### [Production of Layer (A)]

A layer (A) was produced in the same manner as in Example 1.

### [Production of Transfer Sheet with Layer (B) and Anode Catalyst Layer Laminated Thereon]

The coating liquid b10 was applied to the catalyst layer of the anode catalyst layer transfer sheet 1 mentioned above by cast coating, and dried at 100°C for 4 hours to laminate a layer (B-2) (having a thickness of 3 µm). Subsequently, the coating liquid b1 was applied to the layer (B-2) by cast coating, and dried at 100°C for 4 hours to laminate a layer (B-1) (having a thickness of 3 µm). This catalyst layer/layer (B) transfer sheet was a catalyst layer/layer (B-2)/layer (B-1) transfer sheet, in which a catalyst layer and a layer (B) (layer (B-2)/layer (B-1) ) were laminated in this order on a transfer base material, and used to produce a CCM.

### [Production of CCM]

The layer (A) was superposed on and brought into face-to-face contact with the layer (B-1) of the transfer sheet produced above. The resulting laminate was hot-pressed at 150°C at 5 MPa for 3 minutes, cooled to 40°C or less under pressure, and then freed from pressure to obtain a CCM.

### [Example 18]

A CCM was produced according to the following procedure.

### [Production of Laminate of Layer (A) and Layer (B-1)]

The coating liquid b1 was applied to the layer (A) by cast coating, which had been produced in the same manner as in Example 1, and dried at 100°C for 4 hours to obtain a laminate in which a layer (B-1) (having a thickness of 3 µm) was laminated on the layer (A).

### [Production of Catalyst Layer/Layer (B-2) Transfer Sheet]

The coating liquid b10 was applied to the catalyst layer of the anode catalyst layer transfer sheet mentioned above by cast coating, and dried at 100°C for 4 hours to laminate a layer (B-2) (having a thickness of 3 µm). This catalyst layer/layer (B-2) transfer sheet was a transfer sheet, in which a catalyst layer and a layer (B-2) were laminated in this order on a transfer base material, and used to produce a CCM.

### [Production of CCM]

The layer (B-1) of the laminate produced above was superposed on and brought into face-to-face contact with the layer (B-2) of the transfer sheet. The resulting laminate was hot-pressed at 150°C at 5 MPa for 3 minutes, cooled to 40°C or less under pressure, and then freed from pressure to obtain a CCM.

### [Evaluation]

The anode catalyst layer transfer sheet 1 was superposed on the layer (B-2) side of the electrolyte membrane produced in Examples 1 to 16 and Comparative Examples 1 to 3 described above, hot-pressed at 150°C at 5 MPa for 3 minutes, cooled to 40°C or less under pressure, and then freed from pressure to obtain a CCM. These CCMs and CCMs produced in Examples 17 and 18 were evaluated for a joining property between the electrolyte membrane and the catalyst layer according to "(4) Evaluation of Interlaminar Joining Property (Peelability)" described above. The results are tabulated in Table 2. In the table, particle "CB" represents carbon black, and "Ce" represents cerium oxide.

### [Table 2]

**[Table 2]**

| | Layer (A) | Layer (B) | | | | | | | | | Joining property |
|---|---|---|---|---|---|---|---|---|---|---|---|
| | Coating liquid | Layer (B-1) | | | | Layer (B-2) | | | | Particle mass ratio (Y2/Y1) | |
| | | Coating liquid | Particle concentration (Y1) (%) | Particle | Polymer | Coating liquid | Particle concentration (Y2) (%) | Particle | Polymer | | |
| Example 1 | p1 | b1 | 56 | CB | "nafion" | b10 | 0 | - | "nafion" | 0.00 | A |
| Example 2 | p1 | b1 | 56 | CB | "nafion" | b6 | 33 | CB | "nafion" | 0.59 | A |
| Example 3 | p1 | b1 | 56 | CB | "nafion" | b5 | 36 | CB | "nafion" | 0.64 | B |
| Example 4 | p1 | b1 | 56 | CB | "nafion" | b4 | 38 | CB | "nafion" | 0.68 | C |
| Example 5 | p1 | b2 | 71 | CB | "nafion" | b10 | 0 | - | "nafion" | 0.00 | B |
| Example 6 | p1 | b2 | 71 | CB | "nafion" | b5 | 36 | CB | "nafion" | 0.51 | B |
| Example 7 | p1 | b3 | 45 | CB | "nafion" | b10 | 0 | - | "nafion" | 0.00 | B |
| Example 8 | p1 | b3 | 45 | CB | "nafion" | b6 | 33 | CB | "nafion" | 0.73 | B |
| Example 9 | p1 | b5 | 36 | CB | "nafion" | b6 | 33 | CB | "nafion" | 0.92 | D |
| Example 10 | p1 | b11 | 56 | Ce | "nafion" | b10 | 0 | - | "nafion" | 0.00 | A |
| Example 11 | p1 | b1 | 56 | CB | "nafion" | b12 | 0 | - | PVDF | 0.00 | A |
| Example 12 | p1 | b1 | 56 | CB | "nafion" | b9 | 5 | CB | "nafion" | 0.09 | A |
| Example 13 | p1 | b1 | 56 | CB | "nafion" | b8 | 10 | CB | "nafion" | 0.18 | A |
| Example 14 | p2 | b1 | 56 | CB | "nafion" | b10 | 0 | - | "nafion" | 0.00 | A |
| Example 15 | p3 | b1 | 56 | CB | "nafion" | b10 | 0 | - | "nafion" | 0.00 | A |
| Example 16 | p4 | b1 | 56 | CB | "nafion" | b10 | 0 | - | "nafion" | 0.00 | A |
| Example 17 | p1 | b1 | 56 | CB | "nafion" | b10 | 0 | - | "nafion" | 0.00 | A |
| Example 18 | p1 | b1 | 56 | CB | "nafion" | b10 | 0 | - | "nafion" | 0.00 | A |
| Comparative Example 1 | p1 | - | - | - | - | - | - | - | - | - | E |
| Comparative Example 2 | p1 | b10 | 0 | - | "nafion" | - | - | - | - | - | E |
| Comparative Example 3 | p1 | b7 | 25 | CB | "nafion" | - | - | - | - | - | E |

### [Example 21]

The electrolyte membrane was prepared according to the following procedure.

### [Production of Layer (A)]

A layer (A) was produced in the same manner as in Example 1.

### [Lamination of Layer (B)]

The coating liquid b1 was applied to the layer (A) by cast coating, and dried at 100°C for 4 hours to laminate a layer (B-1) (having a thickness of 5 µm) on the layer (A). Subsequently, the coating liquid b4 was applied to the layer (B-1) by cast coating, and dried at 100°C for 4 hours to laminate a layer (B-2) (having a thickness of 5 µm).

### [Example 22]

An electrolyte membrane was prepared in the same manner as in Example 21 except that the coating liquid for the layer (B-2) was changed to a coating liquid b5.

### [Comparative Example 21]

An electrolyte membrane was obtained in the same manner as in Example 21 except that the layer (B) was not laminated.

### [Evaluation]

A cathode catalyst layer transfer sheet 1 was superposed on the layer (B) side of each of the electrolyte membrane produced in Examples 21 and 22 and Comparative Example 21 described above, hot-pressed at 150°C at 5 MPa for 3 minutes, cooled to 40°C or less under pressure, and then freed from pressure to obtain a CCM. These CCMs were evaluated for a joining property between the electrolyte membrane and the catalyst layer according to "(4) Evaluation of Interlaminar Joining Property (Peelability)" described above. The results are tabulated in Table 3. In the table, particle "CB" represents carbon black.

### [Table 3]

**[Table 3]**

| | Layer (A) | Layer (B) | | | | | | | | | Joining property |
|---|---|---|---|---|---|---|---|---|---|---|---|
| | Coating liquid | Layer (B-1) | | | | Layer (B-2) | | | | Particle mass ratio (Y2/Y1) | |
| | | Coating liquid | Particle concentration (Y1) (%) | Particle | Polymer | Coating liquid | Particle concentration (Y2) (%) | Particle | Polymer | | |
| Example 21 | p1 | b1 | 56 | CB | "nafion" | b4 | 38 | CB | "nafion" | 0.68 | A |
| Example 22 | p1 | b1 | 56 | CB | "nafion" | b5 | 36 | CB | "nafion" | 0.64 | A |
| Comparative Example 21 | p1 | - | - | - | - | - | - | - | - | - | E |

### [Example 31]

The electrolyte membranes were prepared according to the following procedure.

### [Production of Layer (A)]

A layer (A) was produced in the same manner as in Example 1.

### [Production of Layer (B) Transfer Sheet D1]

The coating liquid b10 was applied to a commercially available polytetrafluoroethylene-made film by cast coating, and dried at 100°C for 4 hours to laminate a layer (B-2) (having a thickness of 3 µm). In addition, the coating liquid b1 was applied to the layer (B-2) by cast coating, and dried at 100°C for 4 hours to laminate a layer (B-1) (having a thickness of 3 µm), thereby obtaining a layer (B) transfer sheet D1.

### [Production of Layer (B) Transfer Sheet D2]

The coating liquid b4 was applied to a commercially available polytetrafluoroethylene-made film by cast coating, and dried at 100°C for 4 hours to laminate a layer (B-2) (having a thickness of 5 µm). In addition, the coating liquid b1 was applied to the layer (B-2) by cast coating, and dried at 100°C for 4 hours to laminate a layer (B-1) (having a thickness of 5 µm), thereby obtaining a layer (B) transfer sheet D2.

### [Lamination of Layer (B)]

The layer (A) was peeled off from the PET film, one face (anode side face) of the layer (A) was superposed on the layer (B-1) side of the layer (B) transfer sheet D1, and the other face (cathode side face) of the layer (A) was superposed on the layer (B-1) side of the layer (B) transfer sheet D2, hot-pressed at 150°C at 5MPa for 3 minutes, cooled to 40°C or less under pressure, and then freed from pressure to produce an electrolyte membrane.

### [Example 32]

### [Production of Layer (B) Transfer Sheet D3]

A layer (B) transfer sheet D3 was prepared in the same manner except that the coating liquid b1 for the layer (B-1) was changed to a coating liquid b11 in the production of the layer (B) transfer sheet D1.

### [Lamination of Layer (B)]

The layer (A) was peeled off from the PET film, one face (anode side face) of the layer (A) was superposed on the layer (B-1) side of the layer (B) transfer sheet D3, and the other face (cathode side face) of the layer (A) was superposed on the layer (B-1) side of the layer (B) transfer sheet D2, hot-pressed at 150°C at 5MPa for 3 minutes, cooled to 40°C or less under pressure, and then freed from pressure to produce an electrolyte membrane.

### [Example 33]

### [Production of Layer (B) Transfer Sheet D4]

A layer (B) transfer sheet D4 was prepared in the same manner except that the coating liquid b10 for the layer (B-2) was changed to a coating liquid b12 in the production of the layer (B) transfer sheet D1.

### [Lamination of Layer (B)]

The layer (A) was peeled off from the PET film, one face (anode side face) of the layer (A) was superposed on the layer (B-1) side of the layer (B) transfer sheet D4, and the other face (cathode side face) of the layer (A) was superposed on the layer (B-1) side of the layer (B) transfer sheet D2, hot-pressed at 150°C at 5MPa for 3 minutes, cooled to 40°C or less under pressure, and then freed from pressure to produce an electrolyte membrane.

### [Examples 34 to 36]

An electrolyte membrane was prepared in the same manner as in Example 31 except that the coating liquid for the layer (A) p1 was changed as shown in Table 4.

### [Comparative Example 31]

An electrolyte membrane was prepared in the same manner as in Example 31 except that the layer (B) was not laminated.

### [Evaluation]

An anode catalyst layer transfer sheet 1 was superposed on the layer (B) on the anode side of each of the electrolyte membrane produced in Examples 31 and 36 and Comparative Example 31 described above, and a cathode catalyst layer transfer sheet 1 was superposed on the layer (B) on the cathode side of the electrolyte membrane, hot-pressed at 150°C at 5 MPa for 3 minutes, cooled to 40°C or less under pressure, and then freed from pressure to obtain a CCM. These CCMs were evaluated for durability according to "(5) Evaluation of Durability" described above. The results are tabulated in Table 4.

### [Table 4]

**[Table 4]**

| | Layer (A) | Layer (B) on anode side | | | | Layer (B) on cathode side | | | | Durability |
|---|---|---|---|---|---|---|---|---|---|---|
| | Coating liquid | Layer (B-1) | | Layer (B-2) | | Layer (B-1) | | Layer (B-2) | | Rate of increase in voltage (%) |
| | | Coating liquid | Particle concentration (Y1-a) (%) | Coating liquid | Particle concentration (Y2-a) (%) | Coating liquid | Particle concentration (Y1-b) (%) | Coating liquid | Particle concentration (Y2-b) (%) | |
| Example 31 | p1 | b1 | 56 | b10 | 0 | b1 | 56 | b4 | 38 | 2 |
| Example 32 | p1 | b11 | 56 | b10 | 0 | b1 | 56 | b4 | 38 | 5 |
| Example 33 | p1 | b1 | 56 | b12 | 0 | b1 | 56 | b4 | 38 | 8 |
| Example 34 | p2 | b1 | 56 | b10 | 0 | b1 | 56 | b4 | 38 | 5 |
| Example 35 | p3 | b1 | 56 | b10 | 0 | b1 | 56 | b4 | 38 | 8 |
| Example 36 | p4 | b1 | 56 | b10 | 0 | b1 | 56 | b4 | 38 | 8 |
| Comparative Example 31 | p1 | - | - | - | - | - | - | - | - | 15 |

### [Example 41]

A CCM was prepared according to the following procedure.

### [Production of Laminate 1]

The layer (A) was produced in the same manner as in Example 1, and further the layer (B-1) was produced on the layer (A) in the same manner as in Example 1, thereby obtaining a laminate 1.

### [Production of Transfer Sheet 2 With Layer (B-2) and Anode Catalyst Layer Laminated Thereon]

The coating liquid b10 was applied to the catalyst layer of the anode catalyst layer transfer sheet 1 mentioned above by cast coating, and dried at 100°C for 4 hours to laminate a layer (B-2) (having a thickness of 3 µm).

### [Production of Transfer Sheet 3 With Layer (C) and Cathode Catalyst Layer Laminated Thereon]

The coating liquid c1 was applied to the catalyst layer of the cathode catalyst layer transfer sheet 1 mentioned above by cast coating, and dried at 100°C for 4 hours to laminate a layer (C) (having a thickness of 8 µm).

### <Coating Liquid c1>

Particle: Carbon black ("VULCAN" (registered trademark) XC72, manufactured by Cabot Corporation: average particle size, 30 nm) 10 parts by mass
·Polymer: ["Nafion" (registered trademark) product number, D2020], fluorine-based polymer electrolyte manufactured by Chemours Company 9 parts by mass, in terms of solids
·Solvent : Mixed solvent of water and 1-propyl alcohol at a mass ratio of 4:6

The particles and polymer described above were dispersed in a solvent using a bead mill to prepare a coating liquid c1 with a solid concentration of 10 mass%. The particle concentration in the coating liquid c1 is 53 mass%.

### [Production of CCM]

The PET film was peeled off from the laminate 1 to obtain a layer (A)/layer (B-1) laminated membrane. The transfer sheet 2 described above was proposed on the layer (B-1) side of this laminated membrane, the transfer sheet 3 described above was superposed on the layer (A) side. The resulting laminate was hot-pressed at 150°C at 5 MPa for 3 minutes, cooled to 40°C or less under pressure, and then freed from pressure to obtain a CCM. The layer constitution of this CCM is "anode catalyst layer/layer (B)/layer (A)/layer (C)/cathode catalyst layer".

### [Evaluation Result]

The CCMs obtained above were evaluated for the joining property and durability according to "(3) Evaluation of Interlaminar Joining Property (Peelability)" and "(4) Evaluation of Durability" described above. As a result, the joining property between the electrolyte membrane and the anode catalyst layer was evaluated as "A", the joining property between the electrolyte membrane and the cathode catalyst layer was evaluated as "B", and the rate of increase in voltage was 2%.

### [Example 51]

### [Production of Anode Catalyst Layer Transfer Sheet 2]

The following coating liquid for an anode catalyst layer was applied to a commercially available polytetrafluoroethylene-made film by cast coating in such a manner that the amount of iridium became 1.0 mg/cm². The coating liquid was dried at 100°C for 4 hours to produce an anode catalyst layer transfer sheet 2.

### <Coating Liquid for Anode Catalyst Layer>

The coating liquid had a solids concentration of 30 mass%, and contained 10 parts by mass, in terms of iridium element, of commercially available iridium oxide, 2 parts by mass, in terms of platinum element, of commercially available platinum black, 2.5 parts by mass, in terms of solids, of a fluorine-based polymer electrolyte ["Nafion" (registered trademark) product number, D2020] manufactured by The Chemours Company, and a solvent (a mixed solvent of water and 1-propyl alcohol in a mass ratio of 4:6).

### [Production of CCM]

A catalyst-coated electrolyte membrane was produced in the same manner except that in the catalyst-coated electrolyte membrane CCM used for the evaluation in Example 31, the anode catalyst layer transfer sheet 1 was changed to the anode catalyst layer transfer sheet 2 prepared above. The layer constitution of this CCM is "anode catalyst layer/layer (B)/layer (A)/layer (B)/cathode catalyst layer".

### [Example 52]

A CCM was produced in the same manner except that in the production of CCM in Example 41, the anode catalyst layer transfer sheet 1 was changed to the anode catalyst layer transfer sheet 2 produced above. The layer constitution of this CCM is "anode catalyst layer/layer (B)/layer (A)/layer (C)/cathode catalyst layer".

### [Comparative Example 51]

A CCM was produced in the same manner except that in the CCM used for the evaluation in Comparative Example 31, the anode catalyst layer transfer sheet 1 was changed to the anode catalyst layer transfer sheet 2 produced above. The layer constitution of this CCM is "anode catalyst layer/layer (A)/cathode catalyst layer".

### [Example 53]

A CCM was produced in the same manner as in Example 51 except the changing to an anode catalyst layer transfer sheet 3 described below.

### [Production of Anode Catalyst Layer Transfer Sheet 3]

The following coating liquid for an anode catalyst layer was applied to a commercially available polytetrafluoroethylene-made film by cast coating in such a manner that the amount of iridium became 1.0 mg/cm². The coating liquid was dried at 100°C for 4 hours to produce an anode catalyst layer transfer sheet 3.

### <Coating Liquid for Anode Catalyst Layer>

The coating liquid had a solids concentration of 30 mass%, and contained 10 parts by mass, in terms of iridium element, of commercially available iridium oxide, 2 parts by mass, in terms of palladium element, of commercially available palladium black, 2.5 parts by mass, in terms of solids, of a fluorine-based polymer electrolyte ["Nafion" (registered trademark) product number, D2020] manufactured by The Chemours Company, and a solvent (a mixed solvent of water and 1-propyl alcohol in a mass ratio of 4:6).

### [Example 61]

The CCM used in the evaluation of Example 31 was used to perform the following evaluation, which is referred to as Example 61. The layer constitution of this CCM is "anode catalyst layer/layer (B)/layer (A)/layer (B)/cathode catalyst layer".

### [Evaluation]

Each of CCMs obtained in Examples 51 to 53, and 61, and Comparative Example 51 were evaluated was evaluated according to "(4) Evaluation of Interlaminar Joining Property (Peelability)", "(5) Evaluation of Durability", and "(6) Measurement of Concentration of Hydrogen Gas in Oxygen Gas" described above. The results are tabulated in Table 5. In the table, "CCM" represents a catalyst-coated electrolyte membrane, "An" represents an anode catalyst layer, "Ca" represents a cathode catalyst layer, "A" represents a layer (A), "B" represents a layer (B), "C" represents a (C), "Ir" represents iridium, "Pt" represents platinum, and "Pd" represents palladium.

### [Table 5]

**[Table 5]**

| CCM | Layer constitution | Anode catalyst layer (An) | Cathode catalyst layer (Ca) | Joining property | | Durability | Hydrogen concentration in oxygen gas (ppm) |
|---|---|---|---|---|---|---|---|
| | | Catalyst type | Catalyst type | Anode side | Cathode side | Rate of increase in voltage (%) | |
| Example 51 | An/B/A/B/Ca | Ir+Pt | Pt | A | A | 2 | 580 |
| Example 52 | An/B/A/C/Ca | Ir+Pt | Pt | A | B | 2 | 590 |
| Comparative Example 51 | An/A/Ca | Ir+Pt | Pt | E | E | 15 | 2,000 |
| Example 53 | An/B/A/B/Ca | Ir+Pd | Pt | A | A | 2 | 710 |
| Example 61 | An/B/A/B/Ca | Ir | Pt | A | A | 2 | 3,200 |

It can be seen that the concentration of hydrogen gas in the oxygen gas generated at the anode is reduced by the anode catalyst layer containing iridium and a noble metal other than iridium (platinum, palladium) as a catalyst. It can also be seen that the concentration of hydrogen gas is significantly reduced by the combination of the layer (B) containing a fluorine-based polymer electrolyte being disposed on the anode catalyst layer side and the anode catalyst layer containing iridium and a noble metal other than iridium (platinum, palladium) as a catalyst.

### Reference Signs List

1, 2 Electrolyte membrane
10 Layer (A)
20, 20a, 20b Layer (B)
21, 21a, 21b Interface region of layer (B) on layer (A) side
22, 22a, 22b Interface region of layer (B) on the opposite side to layer (A)
30, 40 Catalyst layer
50 Anode catalyst layer
60 Cathode catalyst layer
100, 200 Catalyst-coated electrolyte membrane

## Claims

1. An electrolyte membrane comprising:
a layer (A) containing a polymer electrolyte; and
a layer (B) existing on at least one of the faces of the layer (A),
wherein a particle concentration (Y1), defined below, in an interface region of the layer (B), on the layer (A) side, is higher than a particle concentration (Y2), defined below, in another interface region of the layer (B), on the opposite side to the layer (A),
where the particle concentration (Y1) and the particle concentration (Y2) each refer to a ratio of a mass of particles existing in the interface region to a total mass of solids existing in the interface region.

2. The electrolyte membrane according to claim 1, wherein a ratio (Y2/Y1) between the particle concentration (Y1) and the particle concentration (Y2) is 0.95 or less.

3. The electrolyte membrane according to claim 1 or 2, wherein the particle concentration (Y1) is 45 mass% or more, and the particle concentration (Y2) is less than 45 mass%.

4. The electrolyte membrane according to any one of claims 1 to 3, wherein the layer (B) further contains a polymer.

5. The electrolyte membrane according to any one of claims 1 to 4, wherein the particles contain carbon particles.

6. The electrolyte membrane according to claim 4 or 5, wherein the polymer is a nonelectrolyte or electrolyte fluorine-based polymer.

7. The electrolyte membrane according to any one of claims 1 to 6, wherein the layer (B) is constituted by at least two layers, of which the layer adjacent to the layer (A) has the highest particle concentration.

8. The electrolyte membrane according to any one of claims 1 to 7, wherein the layer (B) is constituted by two layers: a layer (B-1) and a layer (B-2), of which the layer adjacent to the layer (A) is a layer (B-1) and the layer on the opposite side to the layer (A) is a layer (B-2).

9. The electrolyte membrane according to claim 8, wherein when both the layer (B-1) and the layer (B-2) contain particles, both the layer (B-1) and the layer (B-2) contain the same type of particles.

10. The electrolyte membrane according to any one of claims 1 to 9, wherein a thickness of the layer (A) is 30 µm or more and 250 µm or less, and a thickness of the layer (B) is 0.5 µm or more and 20 µm or less.

11. The electrolyte membrane according to any one of claims 1 to 10, comprising the layer (B) on both of the faces of the layer (A).

12. A catalyst-coated electrolyte membrane comprising a catalyst layer on one or both of the faces of the electrolyte membrane according to any one of claims 1 to 11.

13. The catalyst-coated electrolyte membrane according to claims 12, wherein a type of the polymer electrolyte contained in the layer (A) of the electrolyte membrane and a type of the polymer electrolyte contained in the catalyst layer are different from each other.

14. The catalyst-coated electrolyte membrane according to claim 12 or 13, wherein the layer (B) of the electrolyte membrane contains the same type of polymer as that of the catalyst layer.

15. The catalyst-coated electrolyte membrane according to any one of claims 12 to 14, wherein the layer (A) contains a hydrocarbon-based polymer electrolyte, the catalyst layer contains a fluorine-based polymer electrolyte, and the layer (B) contains a nonionic or ionic fluorine-based polymer.

16. A membrane electrode assembly comprising the catalyst-coated electrolyte membrane according to any one of claims 12 to 15.

17. A water electrolysis device comprising the membrane electrode assembly according to claim 16.

18. A catalyst layer/layer (B) transfer sheet used to produce the catalyst-coated electrolyte membrane according to any one of claims 12 to 15, wherein the catalyst layer and the layer (B) are laminated in this order on a transfer base material, the particle concentration (Y1) in the interface region of the layer (B), on the opposite side to the catalyst layer, is higher than the particle concentration (Y2) in the interface region of the layer (B), on the catalyst layer side.

19. The catalyst layer/layer (B) transfer sheet according to claim 18, wherein the layer (B) is constituted by two layers: a layer (B-1) and a layer (B-2), and the catalyst layer, the layer (B-2), and the layer (B-1) are laminated in this order on the transfer base material.

20. The catalyst layer/layer (B) transfer sheet according to claim 18, wherein the layer (B) is constituted by two layers: a layer (B-1) and a layer (B-2), and the catalyst layer and the layer (B-2) are laminated in this order on the transfer base material.

21. A method of producing a catalyst-coated electrolyte membrane comprising an electrolyte membrane including a layer (A) containing a polymer electrolyte and a layer (B) existing on at least one of the faces of the layer (A), and a catalyst layer provided on one or both of the faces of the electrolyte membrane,
the method comprising:
laminating the layer (B) on the layer (A) to obtain the electrolyte membrane according to any one of claims 1 to 11;
laminating the catalyst layer on a transfer base material to produce a catalyst layer transfer sheet; and
performing hot-pressing while the face of the electrolyte membrane, on which the layer (B) is laminated, is brought into face-to-face contact with the face of the catalyst layer transfer sheet, on which the catalyst layer is laminated.

22. A method of producing a catalyst-coated electrolyte membrane comprising an electrolyte membrane including a layer (A) containing a polymer electrolyte and a layer (B) existing on at least one of the faces of the layer (A), and a catalyst layer provided on one or both of the faces of the electrolyte membrane,
the method comprising:
obtaining the layer (A);
laminating a catalyst layer and a layer (B) in this order on a transfer base material to obtain the catalyst layer/layer (B) transfer sheet according to claim 18; and
performing hot-pressing while at least one of the faces of the layer (A) is brought into face-to-face contact with the face of the catalyst layer/layer (B) transfer sheet, on which the layer (B) is laminated.

23. A method of producing a catalyst-coated electrolyte membrane comprising an electrolyte membrane including a layer (A) containing a polymer electrolyte and a layer (B) existing on at least one of the faces of the layer (A), and a catalyst layer provided on one or both of the faces of the electrolyte membrane,
wherein the layer (B) is constituted by two layers, of which the layer adjacent to the layer (A) is a layer (B-1) and a layer on the opposite side to the layer (A) is a layer (B-2),
the method comprising:
laminating the layer (B-1) on the layer (A) to obtain a laminate;
laminating a catalyst layer and a layer (B-2) in this order on a transfer base material to obtain the catalyst layer/layer (B-2) transfer sheet according to claim 20; and
performing hot-pressing while the face of the laminate, on which the layer (B-1) is laminated, is brought into face-to-face contact with the face of the transfer sheet, on which the layer (B-2) is laminated,
wherein a particle concentration (Y1) in an interface region of the layer (B), on the layer (A) side, is higher than a particle concentration (Y2) in another interface region of the layer (B), on the opposite side to the layer (A).
